# EUROPEAN PATENT SPECIFICATION

(11) **EP 2 345 279 B1**
(45) Date of publication and mention of the grant of the patent: **08.05.2013**
(21) Application number: 09749209.4
(22) Date of filing: 19.10.2009
(51) Int. Cl.: H04W 36/00, H04J 11/00

(54) **USE OF A CELL ID AND MASK TO RETRIEVE HOME NODE B GATEWAY ADDRESS**
VERWENDUNG EINER ZELLEN-ID UND MASKE ZUM ABRUFEN DER GATEWAY-ADRESSE DES HEIMATKNOTENS B
UTILISATION D'UN IDENTIFIANT DE CELLULES POUR EXTRAIRE UNE ADRESSE DE PASSERELLE DE NOEUD B DE DÉBUT

(30) Priority: 20.10.2008 US 106748 P
(43) Date of publication of application: 20.07.2011
(73) Proprietor: Telefonaktiebolaget L M Ericsson (PUBL), 164 83 Stockholm (SE)
(72) Inventor: NYLANDER, Tomas, S-139 34 Värmdö (SE); RUNE, Johan, S-181 30 Lidingö (SE); VIKBERG, Jari, S-153 38 Järna (SE)
(74) Representative: Kühn, Friedrich Heinrich
(86) International application number: PCT/SE2009/051180
(87) International publication number: WO 2010/047647

(56) References cited:
- ERICSSON: "S1-handover routing with HeNB Gateway" 3GPP DRAFT; R3-082219, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050165260 [retrieved on 2008-08-13]
- MOTOROLA: "Addressing options for macro-to-HeNB handover with a gateway" 3GPP DRAFT; R3-082748, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050324016 [retrieved on 2008-09-24]
- ALCATEL-LUCENT: "Mobility towards home eNBs" 3GPP DRAFT; R3-081852_GTWID, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050164929 [retrieved on 2008-08-13]
- 3GPP: "3rd Generation Partnership Project; Technical Specification Group Radio Access Network; Home (e)NodeB; Network aspects(Release 8)" 3GPP TR R3.020 V0.9.0, [Online] September 2008 (2008-09), - September 2008 (2008-09) pages 1-67, XP002567762 SOPHIA-ANTIPOLIS, FRANCE Retrieved from the Internet: URL:www.3gpp.org> [retrieved on 2010-02-10]

## Description

### TECHNICAL FIELD

The invention relates to a target radio base station, a method in the target radio base station, a source radio base station, a method in the source radio base station, a user equipment and a method in the user equipment, in particular, for enabling a handover of a connection to the user equipment from a source cell to a target cell.

### BACKGROUND

Specification is ongoing in 3GPP for the Evolved Universal Terrestrial Radio Access Network (E-UTRAN) which is the next generation Radio Access Network (RAN). Another name for E-UTRAN, used in this document, is the Long Term Evolution (LTE) RAN. The core network which E-UTRAN is connected to is called Evolved Packet Core (EPC), a.k.a. System Architecture Evolution (SAE) network. Both the E-UTRAN and the EPC comprise together the Evolved Packet System (EPS) that is also known as the SAE/LTE network. A base station in this concept is called E-UTRAN NodeB (eNodeB or eNB). The ongoing specification also includes the possibility to have an E-UTRAN base station to provide home or small area coverage for a limited number of users. This base station is, in 3GPP and in this document, called Home E-UTRAN NodeB (HeNB). Other names used for this type of base station are LTE Home Access Point (LTE HAP) and LTE Femto Access Point (LTE FAP).

The HeNB would provide normal coverage for the end users and would be connected to the mobile core network using some kind of IP based transmission. The coverage provided is, in this document, called a femtocell due to the normally small limited size of the coverage area.

One of the main drivers of this new concept of providing wireless local access is to provide cheaper call or transaction rates/charges when connected via a HeNB compared to when connected via an eNB.

The HeNB would, in most cases, use the end user's already existing broadband connection e.g. xDSL or cable to achieve connectivity to the operator's mobile Core Network (CN) and possibly to other eNBs/HeNBs. Over the broadband connection and other possible intermediate IP networks, e.g. in the internet, a HeNB communicates with the core network nodes in the operator's network via an IPsec tunnel (Internet Protocol security architecture according to RFC 4301), which is established between the HeNB and a Security Gateway (SEGW), which protects the border of the operator's network.

In LTE RAN architecture eNBs serve macrocells and HeNBs serve femtocells. The eNBs and the HeNBs have LTE RAN interfaces S1 to the CN, and LTE RAN architecture comprises X2 interfaces, between eNBs. A HeNB Concentrator Node, which can also be referred to as the HeNB Gateway (HeNB GW), can also be comprised between the HeNB and the CN. In at least some configurations a Security Gateway (SEGW) can be logically placed between the HeNB and the HeNB GW and can serve for terminating IPsec tunnels from the HeNB. The main reasons for having a HeNB GW between the HeNBs and the CN are the following:
1. The assumed number of HeNBs in a network is very high, millions of HeNBs is one estimate.
2. End users can switch on and off the HeNB frequently, causing increased signalling load.
3. HeNBs can be tampered with, e.g. malicious or modified software.

The first issue creates a possible scaling problem in the CN side as each HeNB will have its own S1 interface and it is assumed that Mobility Management Entities (MMEs) are not capable of handling millions of S1 interfaces. Therefore, one purpose of the HeNB GW is to conceal the large number of HeNBs from the CN.

The second issue creates a possible signalling load problem in the CN side and this mostly in the MME due to HeNB S1 interfaces being frequently disconnected and reconnected.

The third issue creates a possible security problem in both the MME and Serving GW as any HeNB that is able to establish an IPsec tunnel to a security gateway of the operator's network can attack these nodes.

The HeNB GW is needed to solve these scaling, signalling load and security issues towards the CN. The HeNB GW will act as an eNB proxy for all the HeNBs that are connected to the HeNB GW. The HeNB GW will, from the CN over the S1 interface, look like one eNB with many cells. From the point of view of an HeNB, the HeNB GW will look like the CN, also S1 interface possibly with some additions or modifications.

The number of HeNBs connected to a HeNB GW is likely to be up to several tens of thousands, ∼100 000, as the number of HeNB GWs in a full network, ∼1 million HeNBs, should not exceed a few tens, ∼10. Thus the number of femtocells "served" by an HeNB GW, an eNB proxy, can be up to a few hundreds of thousands, ∼200 000, assuming a HeNB on average serves a few, ∼2, femtocells.

An eNB is identified by its eNB-ID. An eNB-ID is also allocated to each HeNB in the system. As an HeNB-GW shall act as an eNB proxy, it will also be allocated an eNB-ID.

Any LTE cell is identified in a PLMN by its E-UTRAN Cell Global Identity (E-CGI), which is broadcasted as part of the system information in the LTE cell. An E-CGI is a combination of:
- eNB identity (eNB-ID)
- Local cell identity (LC-ID)

For cells served by the same eNB, only LC-ID differs. The E-CGI is unique in one PLMN and it may be used in conjunction with the Network identity (PLMN-ID) to make it globally unique. Thus, the E-CGI may be referred to as a "unique" or "global" identity.

The total length of the E-CGI is defined to be 28 bits, and some of those bits will contain the eNB-ID or HeNB-ID, i.e. the node identifier, and can be used to identify this node. For example, it may be the case that the 20 or 24 first bits of the E-CGI contain the eNB-ID and identify the node controlling the cell or that all 28 bits of the E-CGI constitute the eNB-ID. The rest of the bits, i.e. 8, 4 or 0 respectively, will locally identify the cell within that node. The last length i.e. 0 bits used to locally identify the cell within the node means that it is only possible to have a single cell per (H)eNB.

There also exists another type of identity called the Physical Cell Identity (PCI). The PCI is used on the radio layer to identify the different cells. Like the E-CGI, the PCI is broadcasted in the cell, but the PCI is sent more often than the E-CGI. Consequently, it is more efficient to use the PCI rather than the E-CGI for identifying a cell. The PCI is normally also used in neighbouring cell measurements and measurement reporting. The total number of different PCIs is limited to 504. Hence, PCIs are reused among the cells in a network and normally the PCI allocation is a demanding task in the network planning to ensure that neighbouring macrocells do not use the same PCI. This also means that the PCI for a macrocell in a specific location is unique and enough to identify the macrocell.

The situation is somewhat different when it comes to femtocells. The femtocells are also identified with a PCI on the radio layer. The femtocells are installed by the end users without any intervention from the operator's personnel and this means that PCI planning is not possible. Also, the number of femtocells may be very high. The current working assumption is to dedicate some of the available 504 PCIs, for example ∼50 PCIs, for the femtocells only. However, it is totally possible that there is more than 50 femtocells in the coverage of one macrocell. This leads to a situation commonly called "PCI confusion" meaning that the PCI only is not unique and that the global cell identity, E-CGI, see above, is needed to uniquely identify a femtocell. It is also preferred to configure the different network nodes such as eNB, HeNB GW and HeNB with information about the PCI values dedicated for the femtocells to be able to know when the "PCI confusion" is possible.

In cellular wireless communications systems in general, the need will arise to perform a handover (HO) when a UE moves away from the area covered by a certain cell into the area covered by another cell during an ongoing call or data session. That is, the connection needs to be handed over to the node which serves the new cell, to avoid dropping the connection. To enable handovers, the UE repeatedly performs measurements of the received signal strength from nodes in its vicinity. The serving node, i.e. the node that the UE is currently connected to, may supply the UE with a list of cells to perform measurements on. Typically this will be a list comprising the PCI:s of neighbouring cells. At regular intervals or when special measurement thresholds are met, the UE will send measurement results, coupled to a certain PCI, to its serving node. Based on these reports, the serving node or "source node" determines whether to request a handover to a different node, the "target node". If a handover is required, the source node needs to establish a connection to the target node. This can usually be done using the PCI, i.e. as the PCI is unique, the eNB uses it to find all the needed information about the target cell and the target node serving the target cell. However, if there is a possibility of PCI confusion - e.g. if the target node is a HeNB - the source node will request the UE to send the E-CGI for the target node as well. The target node can then be contacted with the help of the addressing information contained in the E-CGI. If the target node accepts the request, the connection can be handed over.

Handover between two eNBs may be performed using the X2 interface, so called 'X2 initiated/based handover'. When an X2 interface is set up between two eNBs, the identity of the eNB, eNB-ID, and a list of information on the cells served by this eNB is sent to the other eNB and vice versa. Note that an X2 interface is established only between eNBs that serve neighbouring cells where handover may be performed or when Inter Cell Interference Coordination ICIC is needed. The protocol used for the X2 control plane is called X2AP (X2 Application Protocol) and the X2AP messages X2 SETUP REQUEST and X2 SETUP RESPONSE, are defined to establish an X2 interface.

The CN node that controls eNBs and HeNBs, possibly via HeNB GWs, is called Mobility Management Entity (MME). MMEs can be pooied in the sense that a group, or pool, of MMEs share the task of controlling a certain set of (H)eNBs, wherein the cells served by these (H)eNBs preferably cover a continuous area (or at least without having cells belonging to other MME pools scattered in between). There is a many-to-many relation between eNBs and MMEs, such that all MMEs in an MME pool are connected to all the eNBs that the MME pool controls. For HeNBs the many-to-many relation with the MMEs is preferably mediated, or proxied, by a HeNB GW.

The MMEs also handles control signalling towards the UEs that are connected via the (H)eNBs, using the Non-Access Stratum (NAS) protocols. For each UE that accesses the network via an (H)eNB the (H)eNB selects an MME in the MME pool, which will handle the NAS signalling towards the UE for as long as the UE remains connected to the MME pool, i.e. as long as the UE remains connected to the CN via one of the (H)eNBs belonging to the MME pool. Since the (H)eNBs, mostly, select different MMEs for different UEs, load-sharing is effectively introduced between the MMEs of an MME pool. In the case where a HeNB GW is deployed, it is assumed that the MME pool support, e.g. selection of an MME, is performed by the HeNB GW. The HeNB provides the available information received from the UE to the HeNB GW so that it can preferably again select the same MME as previously, i.e. when still connected to the same MME pool.

The current assumption in 3GPP is that HeNB related handovers shall be performed using the S1 interface, at least in the initial phases of LTE deployment. However, this may cause severe signalling and processing load in the MMEs of the radio communications network. Thus, the use of 'X2' protocol for HeNB and HeNB GW may be considered for handovers involving an HeNB in order to anticipate a greater number of deployed HeNBs.

An EPS network of more than moderate size will typically have several MME pools, where each MME pool controls a subset of the network's (H)eNBs. The X2 interface is only established between (H)eNBs belonging to the same MME pool. Between (H)eNBs belonging to different MME pools the handover signalling is conveyed via MMEs and the S1 and S10 interfaces, where the S10 interface is the inter-MME pool, control plane, interface, i.e. an interface for control signalling between two MMEs belonging to different MME pools. Handovers between cells belonging to different MME pools are referred to as inter-MME pool handovers.

As stated above, the current assumption in 3GPP is that handovers involving HeNBs, i.e. handovers from a macrocell to a femtocell or vice versa, will be performed using the S1 interface. However, the HeNBs cannot be contacted directly by other nodes, because the HeNB-GW acts as an eNB proxy. Thus, handovers involving HeNBs will need to go through the HeNB-GW. To make this possible, it is assumed that the E-CGI that is broadcasted by a HeNB includes the identity of both the HeNB itself and the HeNB-GW that the HeNB is attached to, wherein the HeNB-GW ID is a part of the HeNB-ID which is a part of the E-CGI. When there is a need for handover from a macrocell to a femtocell, the source node, eNodeB, will request the UE to send the E-CGI for the target cell, i.e. a femtocell served by a HeNB. The source node will then forward the HeNB-ID to the MME, which will extract the HeNB GW ID and lookup the correct S1 interface, so that the connection to the target node can be established.

In order for the eNB-ID of a femtocell to point at the HeNB-GW that controls the HeNB that serves the femtocell, one possible solution is to divide the eNB-ID for HeNBs in two parts. The first part will be the identity of the HeNB-GW and the second part will be HeNB unique within the HeNB-GW. The, say, 20 lowest values of the first say 6 bits, 64 values, of the CI are reserved for HeNB-GWs and the rest, 44 values, for eNBs. This makes it possible to have, in a network, up to 20 HeNB-GWs each "serving" up to 4 million femtocells and up to 700 thousands, 44 times 16 thousands, eNBs each serving up to 256 macrocells. With up to 4 femtocells per HeNB this makes it possible to have 1-4 million HeNB per HeNB-GW and up to 20 million HeNBs in a network.

With the 3GPP definitions and the solution for eNB-ID described above, the identity for an "eNB" (eNB/HeNB/HeNB-GW) can be derived from the E-CGI of a cell served by the "eNB".

For the purpose of routing messages to the proper "eNB" (eNB/HeNB/HeNB-GW), the IP address can for example be retrieved by a DNS query. The eNB-ID. or part of it, shall be part of a fully qualified domain name (FQDN) used in the query.

The solution described above, where a certain part of the E-CGI is statically assigned to indicate the HeNB GW, has the drawback of requiring a lot of operation and maintenance (O&M) work to define and maintain the static definitions in the network. This is because all the nodes in the system must be made aware of the E-CGI format to enable them to retrieve the HeNB GW address.

Furthermore, in a typical scenario the number of HeNBs in a network would continuously grow, forcing the operator to gradually replace low-capacity HeNB GWs with high-capacity dittos and thereby more or less always have to maintain HeNB GWs with varying capacities, in terms of number of potentially connected HeNBs and femtocells, and thus varying addressing needs, in the same network. This dynamic heterogeneity implies that configuration of the "fixed" number of bits of the E-CGI from which the HeNB GW address can be derived would be a demanding, and possibly error-prone, task. An additionally complicating circumstance is that an eNB may well have neighbouring HeNBs that are connected to different HeNB GWs with different capacities and thus basing their respective HeNB GW address derivation on different "fixed" number of bits. Consequently, it would not suffice to configure the "fixed" number of bits in an eNB, but there may often be a need to configure several different "fixed" numbers associated with different HeNBs, e.g. E-CGI ranges.

AS previously stated, the current assumption is that HeNB related handovers shall be performed using an S1 interface. However, this may cause severe signalling and processing load in the MMEs of the radio communications network in that nodes in the system must be made aware of the E-CGI format to enable them to retrieve the HeNB GW address.
Document Tdoc R3-082219 "S1-handover routing with HeNB Gateway" 3GPP TSG-RAN WG3 #61Jeju Island, Korea, August 18 - 22, 2008; discloses a handover to a HeNB.

### SUMMARY

Therefore, an object of embodiments herein is to provide a mechanism that supports a gateway node with different capacities to be used in an efficient manner.

The object may be achieved by the main claims 1,6,7,18,19,20.

According to a first aspect the object is achieved by a method in a target radio base station. The method is for enabling a handover of a connection to a user equipment from a source cell to a target cell associated with a target cell identity. The source cell is served by a source radio base station and the target cell is served by the target radio base station. The target radio base station and the source radio base station are comprised in a radio communications network. The target radio base station is adapted to be connected to a gateway node associated with a network node identity. The gateway node is acting as a proxy for the target radio base station towards a core network and towards the source radio base station. The target radio base station broadcasts, periodically within the target cell on a radio channel to the user equipment, the target cell identity and a mask. The target cell identity comprises the network node identity of the gateway node embedded in the target cell identity, and wherein the mask is to be used to derive the network node identity from the target cell identity.

In order to perform the method a target radio base station is provided. The target radio base station comprises a broadcasting unit arranged to broadcast, periodically within the target cell on the radio channel to the user equipment, the target cell identity and a mask. The target cell identity comprises the network node identity of the gateway node embedded in the target cell identity and the mask is to be used to derive the network node identity from the target cell identity.

The object is achieved according to a second aspect by a method in the user equipment for enabling a handover of a connection to the user equipment from the source cell to the target cell associated with a target cell identity. The source cell is served by the source radio base station, and the target cell is served by a target radio base station. The target radio base station and the source radio base station are comprised in a radio communications network. The target radio base station is adapted to be connected to a gateway node associated with a network node identity. The gateway node is acting as a proxy for the target radio base station towards a core network and towards the source radio base station. The user equipment receives the target cell identity and a mask broadcasted within the target cell on a radio channel from the target radio base station. The target cell identity comprises the network node identity of the gateway node embedded in the target cell identity, and the mask is to be used to derive the network node identity from the target cell identity. The user equipment further transmits the target cell identity and the mask to the source radio base station thereby enabling the source radio base station to identify the gateway node the target radio base station belongs to.

In order to perform the method a user equipment is provided. The user equipment comprises a receiving unit arranged to receive the target cell identity and the mask broadcasted within the target cell on a radio channel from the target radio base station. The target cell identity comprises the network node identity of the gateway node embedded in the target cell identity and the mask is to be used to derive the network node identity from the target cell identity. Furthermore, the user equipment comprises a transmitting unit arranged to transmit the target cell identity and the mask to the source radio base station. This enables the source radio base station to identify the gateway node the target radio base station belongs to.

The object is achieved according to a third aspect by a method in the source radio base station. The method is for initiating a handover of a connection to the user equipment from the source cell to the target cell associated with a target cell identity. The source radio base station receives, on a radio channel from the user equipment, the target cell identity and a mask. The target cell identity comprises the network node identity of the gateway node embedded in the target cell identity, and the mask is to be used to derive the network node identity from the target cell identity.

The source radio base station 15 derives the network node identity embedded in the target cell identity using the mask. Then, the source radio base station 15 initiates the handover of the connection to the user equipment 13 from the source cell 12 to the target cell 11 based on the derived network node identity.

In order to perform the method a source radio base station is provided. The source radio base station comprises a receiving unit arranged to receive, on a radio channel from the user equipment, the target cell identity and a mask. The target cell identity comprises the network node identity of the gateway node embedded in the target cell identity and the mask is to be used to derive the network node identity from the target cell identity. Furthermore, the source radio base station comprises a deriving unit arranged to derive the network node identity embedded in the target cell identity using the mask. In addition the source radio base station comprises an initiating unit 1503 arranged to initiate the handover of the connection to the user equipment 13 from the source cell 12 to the target cell 11 based on the derived network node identity.

Hence, a mechanism is provided to support a gateway node with different capacities to be used in an efficient manner by reporting the target cell identity and the mask to the source radio base station.

### BRIEF DESCRIPTION OF THE DRAWINGS

Embodiments will now be described in more detail in relation to the enclosed drawings, in which:
- Figure 1: is a schematic block diagram showing the LTE RAN architecture with macro- and femtocells.
- Figure 2: is a schematic block diagram showing details of LTE RAN with the femtocell solution.
- Figure 3: is a combined signalling scheme and flowchart illustrating embodiments of present solution.
- Figure 4: is a combined signalling scheme and flowchart illustrating embodiments of present solution.
- Figure 5: is a combined signalling scheme and flowchart illustrating embodiments of present solution.
- Figure 6: is a combined signalling scheme and flowchart illustrating embodiments of present solution.
- Figure 7: is a schematic diagram illustrating the extraction of the gateway node identity according to an embodiment.
- Figure 8: is a schematic diagram illustrating the extraction of the gateway node identity according to an embodiment.
- Figure 9: is a schematic diagram illustrating the extraction of the gateway node identity according to an embodiment.
- Figure 10: is a schematic flow chart of a method in a target radio base station according to some embodiments.
- Figure 11: is a schematic block diagram showing a target radio base station according to some embodiments.
- Figure 12: is a schematic flow chart of a method in a user equipment according to some embodiments.
- Figure 13: is a schematic block diagram showing a user equipment according to some embodiments.
- Figure 14: is a schematic flow chart of a method in a source radio base station according to some embodiments.
- Figure 15: is a schematic block diagram showing a source radio base station according to some embodiments.

### DETAILED DESCRIPTION

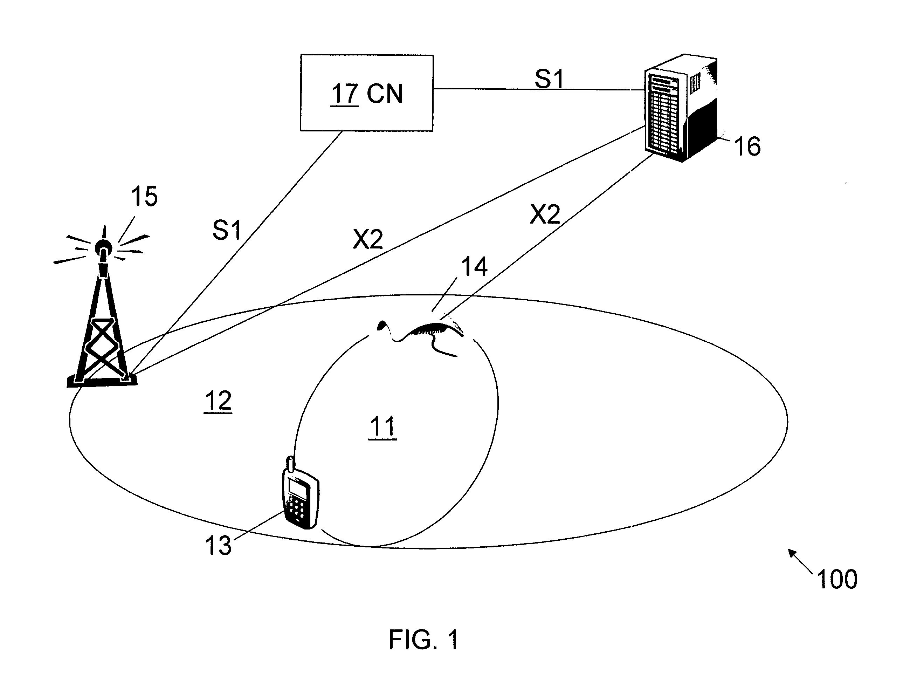

**Fig. 1** shows an example of a **radio communications network 100** in which the present invention is suitably applied. As shown, the radio communications network 100 is a cellular system and comprises a number of cells, two of which are shown as a **femtocell 11** and **a macrocell 12** in Fig 1. Each cell may comprise a number of user terminals, with the generic name "UE", User Equipment, one is shown as **a UE 13.**

For each cell in the radio communications network 100, there is a controlling node, generically referred to as a "radio base station", RBS. A HeNB. i.e. one type of RBS, also referred to as **a target radio base station 14,** controls the femtocell 11 and a RBS, also referred to as **a source radio base station 15,** controls the macrocell 12. One role of the source radio base station 15 is that all traffic to and from the UE 13 in the cell 12 is routed via the source radio base station 15. The wording source and target are in the context of handover. That is, the UE 13 is at the cell border of the target cell 11 and handover is needed, and the source radio base station 15 is the radio base station currently serving the UE.

The radio communications network 100 may comprise an LTE network as well as other networks such as Global System for Mobile communication (GSM), UMTS, WCDMA, or the like. An RBS may be denoted as NodeB or eNodeB in some of the networks. Herein the solution will be exemplified in an LTE network and the source radio base station will be referred to as eNodeB.

A HeNB Concentrator Node, herein referred to as a **Gateway node (HeNB GW) 16,** may also be comprised between the target radio base station 14 and **a Core Network** (CN) 17. The HeNB GW 16 acts as a proxy for the target radio base station 14 towards the core network 17 and the source radio base station 15. Hence, the HeNB GW 16 is an intermediate node between the target radio base station 14 and the core network 17 and the source radio base station 15 acting as an intermediary for requests from the core network 17 and the source radio base station 15 seeking the target radio base station 14.

The UE 13 is served in the macrocell 12 by the source radio base station 15 and detects signals from the target radio base station 14. The target radio base station 14 broadcasts a target cell identity and a mask. The target cell identity comprises the network node identity of the gateway node 16 embedded in the target cell identity. The mask is to be used to derive the network node identity from the target cell identity. The target cell identity and the mask may be sent separately in e.g. different System information broadcasts

The target cell identity and the mask are reported, separately or together, from the UE 13 to the source radio base station 15. Thus, the UE 13 makes the mask available for the source radio base station 15 via, for example, Automatic Neighbour Relation (ANR).

As a part of the normal call procedure, the source radio base station 15 instructs each UE to perform measurements on neighbor cells. The source radio base station 15 may use different policies for instructing the UE 13 to do measurements, and when to report them to the source radio base station 15. The UE 13 sends a measurement report regarding target cell. This report may contain Cell B's PCI. When the source radio base station 15 receives a UE measurement report containing the PCI, the following sequence may be used The source radio base station 15 instructs the UE 13, using the newly discovered PCI as parameter, to read the ECGI i.e. the PLMN ID, the CSG Indicator and the Cell Identity, the TAC and all available PLMN ID(s) of the related neighbour cell. To do so, the source radio base station 15 may need to schedule appropriate idle periods to allow the UE 13 to read the ECGI from the broadcast channel of the detected neighbour cell. When the UE 13 has found out the new cell's ECGI, the UE reports the detected ECGI i.e. the PLMN ID, the CSG Indicator and the Cell Identity, to the serving cell source radio base station 15. In addition the UE 13 reports the tracking area code and all PLMN IDs that have been detected. The source radio base station 15 decides to add this neighbour relation, and can use PCI and ECGI to: lookup a transport layer address to the new target radio base station; Update a Neighbor Relation List; if needed, setup a new X2 interface towards this target radio base station.

This reporting enables ANR triggered X2 interface establishment as the source radio base station 15 may use information from the reporting UE 13 to construct a fully qualified domain name (FQDN). The FQDN may be translated to an IP address of the HeNB GW 16. X2 is an inter radio access network subsystem connection between nodes in the RAN and S1 connection is a connection from the radio access network to the core network 17/operation and maintenance network.

The source radio base station 15 does not need to know that the address belongs to the HeNB GW 16 and not to the target radio base station 14. Thereby the establishment of the X2 interface may be performed without the involvement of an MME and without S1 procedures even though the HeNB GW 16 acts as a proxy and concentrator node for X2 interfaces.

Providing the mask in the broadcasted system information from the target radio base station 14 enables a neighbouring radio base station, that is, the source radio base station 15, to handle X2 establishment independently of an MME node and S1 signalling. The source radio base station 15 establishes an X2 interface by using the ANR report from the UE 13 and a DNS service.

The mask in the report from the UE 13 enables the source radio base station to decide whether a new X2 interface is needed to be established or whether an existent X2 interface to the HNB GW 16 may be used. The source radio base station 15 may identify the existent X2 interface to be used. It should here be noted that knowledge of previous masks and/or target radio base stations would not be enough to enable this identification, since dynamical mask length may enable a high capacity HeNB GW, with a short mask, appear to own an identity range of target radio base station of a low capacity HeNB GW with a longer mask. That is, the short mask may be a part of the long mask and indicate an erroneous identity range. This may be solved by using a longest match principle. The source radio base station 15 comprises a first and a second mask reported from the UE 13 and uses the mask with the longest match of the network node identity. It should be understood that the target radio base station 14 may obtain/receive the mask from the O&M system during the auto configuration of the target radio base station 14 or from the HeNB GW 16 during establishment of the S1 interface. By obtaining the mask during S1 interface establishment the solution also works even if the HeNB GW 16 redirects the target radio base station 15 to a different HeNB GW during the S1 establishment.

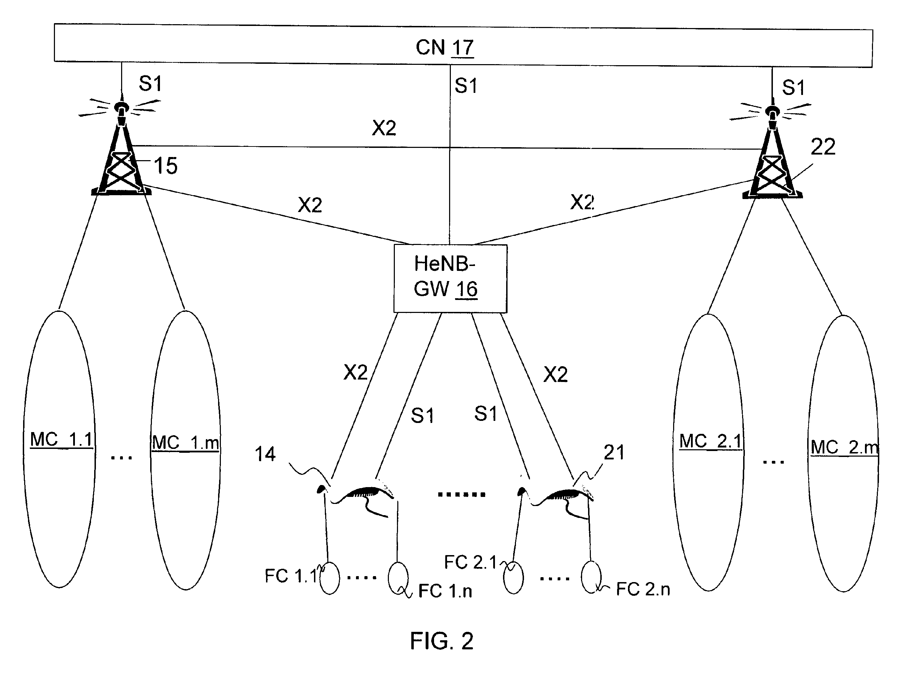

Reference will now be made to Fig 2, which shows nodes and interfaces in LTE RAN in more detail.

The source radio base station 15 may not keep addressing information and X2 interfaces to all its neighbouring HeNBs due to the potentially high number of these nodes. It is assumed that an X2 interface, herein being an example of a inter radio access network subsystem connection, to the target radio base station 14 is established via the gateway node 16, meaning that the gateway node 16 will act as an X2-proxy in both directions. The term radio access network subsystem is used to denote either a single macro RBS, i.e. an eNB, or a group of nodes consisting of a gateway nodes together with its connected HeNBs. In its role as an X2-proxy the gateway node 16 may look like one radio base station with many cells in the view from a radio base station without an S1 connection via HeNB GW, e.g. the source radio base station 15, and as a radio base station with many cells in the view from a radio base station with an S1 connection via the gateway node 16, e.g. the target radio base station 14. This means also that the gateway node 16 will solve the scaling, signalling load and security towards the radio base stations in a similar way as it protects the CN 17. It should also be noted that the inter radio access network subsystem connection may comprise other interfaces when being comprised in other networks, such as lur/lub in UMTS, Abis/lur in GSM or the like.

Referring to Fig 2, when the need arises to perform a handover between source radio base station 15 and target radio base station 14, this may in some exemplary embodiments be performed using an X2 interface between the source radio base station 15 and target radio base station 14. This means that, in these embodiments an X2 interface needs to be established first between the source radio base station 15 and the gateway node 16 and then between the gateway node 16 and the target radio base station 14. If the X2 interface is established as normally, then the gateway node 16 would inform the source radio base station 15 about all the femtocells FC1.1...FC1.n, FC 2.1...FC2.n, that are handled by the target radio base station 15 and a second target radio base station 21, HeNB, connected to this gateway node 16. In the same way, the source radio base station 15 would inform the gateway node 16 about all the macrocells MC1.1...MC1-m that it is serving. The same principles may be used between the gateway node 16 and the target radio base station(s) 14, 21. However, some simplifications are possible when the X2 interface is established between the gateway node 16 and a target radio base station. The X2 interface may be established already at an automatic configuration of the target radio base station 14, 21. "Default routing" may also be applied in the direction from the target radio base stations 14,21 to gateway node 16 meaning that the gateway node 16 would not need to signal to the target radio base stations 14,21 all the served cells which it has X2 interfaces to. Instead the target radio base stations 14 may send all X2 signalling on the single interface towards the gateway node 16.

The addressing information used to establish an X2 interface, assuming now that the handover is from the source radio base station 15 to the target radio base station 14, is based on that the UE 13 will report a unique or global cell identity of the target cell FC 1.1 a so called E-CGI, E-UTRAN Cell Global Identifier, obtained from the system information broadcasted by target radio base station 14. The E-CGI will comprise the identity of the target radio base station 14 serving the femtocell FC 1.1.

However, the situation is somewhat different in the case the gateway node 16 is used as an X2-proxy. In this case, it should be possible to identify the gateway node 16 that is controlling the target radio base station 14 based on the E-CGI. One possible solution would be to define that some fixed number of bits, for example the 8 first bits of the E-CGI are used to identify the gateway node 16. If information about the number of these fixed bits is configured in the source radio base station 15 then the source radio base station 15 would be able to take the fixed number of the first bits in the received E-CGI and use these to retrieve the address to the gateway node 16. This address retrieval is not further described here more than that it may be based on creating a FQDN based on the fixed number of the bits and use DNS to resolve the gateway node address. This information may then be used to both i) establish the X2 interface towards the gateway node and ii) select the correct X2-interface for an X2-based handover request in cases where the required X2 interface is already established.

As mentioned above, using a fixed number of bits for identifying the gateway node 16 has the drawback of requiring significant configuration of the network, and furthermore it does not support having gateway nodes with different capacities in the network. Hence, by providing a mask together with the E-CGI and said mask indicates which part of the E-CGI identifies the gateway node, thereby enabling a flexible addressing scheme.

The purpose of the mask is to indicate how many bits of the E-CGI constitute the radio base station ID of the gateway node 16, i.e. the gateway node ID. It is suitably realized as an integer or possibly as a bit string mask to be applied to the E-CGI, in the form of a bit string, to mask out the gateway node ID, e.g. by extracting the bits of the E-CGI which correspond to the bits set to one in the mask. By providing the mask in the report from the UE 13, this enables the source radio base station to decide whether a new X2 interface is needed to be established or whether an existent X2 interface to the HNB GW 16 may be used. The source radio base station 15 may identify the existent X2 interface to be used.

An X2 interface between the source radio base station 15 and **a second macro radio base station 22** is shown in Fig. 2. This X2 interface may be used for handover between two macro radio base stations. The second radio base station 22 serves a number of **macrocells MC2.1...MC2.m.**

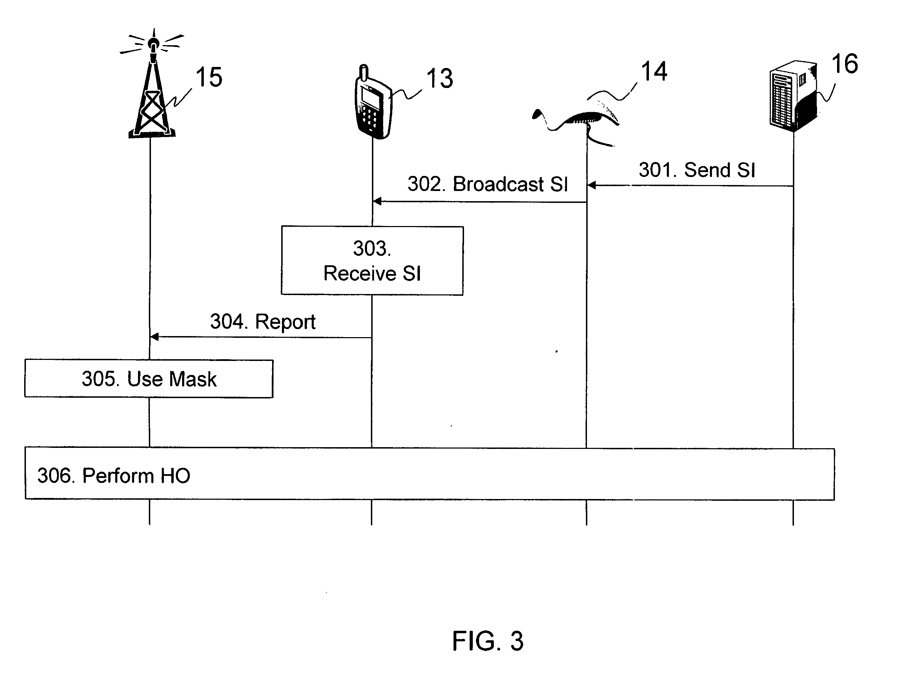

**Fig. 3** shows embodiments of a method of using a mask enabling a handover of a connection to the user equipment 13 from the source cell 12 to the target cell 11 (shown in Fig. 1) associated with a target cell identity. The source cell 12 is served by the source radio base station 15 and the target cell 11 is served by the target radio base station 14. The target radio base station 14 and the source radio base station 15 are comprised in the radio communications network 100.

The target radio base station 14 is connected to the gateway node 16 associated with a network node identity. The gateway node 16 is acting as a proxy for the target radio base station 14 towards a core network 17 and towards the source radio base station 15.
**Step 301.** The gateway node 16 sends the system information to the target radio base station 14. The system information comprises, for example, the target cell identity such as E-CGI and also the mask to be used to extract the network node identity of the gateway node 16. It should be noted that the target radio base station 14 may also receive this information from an O&M system. The gateway may be transmit the target cell identity and the mask separately or together,
**Step 302.** The target radio base station 14 receives the SI and broadcasts the SI within the target cell 11.
**Step 303.** The UE 13 receives the SI by scanning an operating frequency for a signal. The UE 13 receives the target cell identity and the mask from the signal. This may be performed during an ANR process of the UE 13 wherein the UE 13 measures signal strength of the received signal.
**Step 304.** The UE 13 reports the target cell identity and the mask to the source radio base station 15. The UE 13 may report the target cell identity and the mask comprised in a report of the measured signal strength transmitted to the source radio base station 14. The UE 13 may also report physical cell identity of the target cell.
**Step 305.** The source radio base station 15 receives the target cell identity and the mask. The mask is used by the source radio base station 15 to derive the network node identity, which is embedded in the target cell identity.
**Step 306.** From the derived network node identity the source radio base station 15 may retrieve the IP address and perform a handover of the connection of the UE 13 to the target cell 11. The mask in the report from the UE 13 enables the source radio base station 15 to decide whether a new X2 interface is needed to be established or whether an existent X2 interface to the HNB GW 16 may be used. The source radio base station 15 may identify the existent X2 interface to be used.

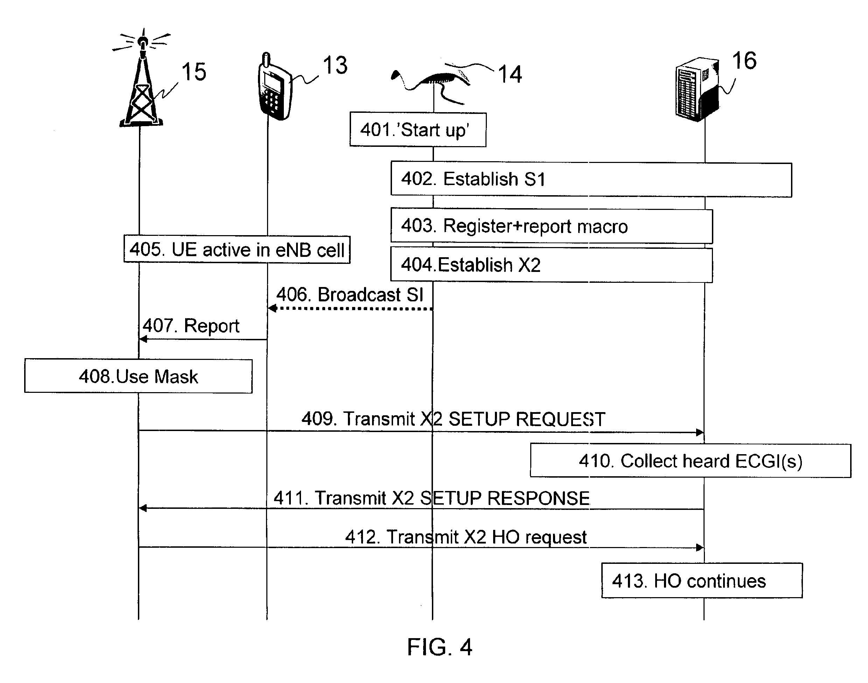

Two different specific embodiments describing the using of the mask will now be described in detail. These embodiments provide assistance for different phases of the communication. For example, Fig. 4 below may be used both as a trigger to establish the X2 interface towards the correct node and also used to select the correct X2 interface in the source radio base station 15 among the already established X2 interfaces. An MME may also be assisted in its selection of the correct S1 interface.

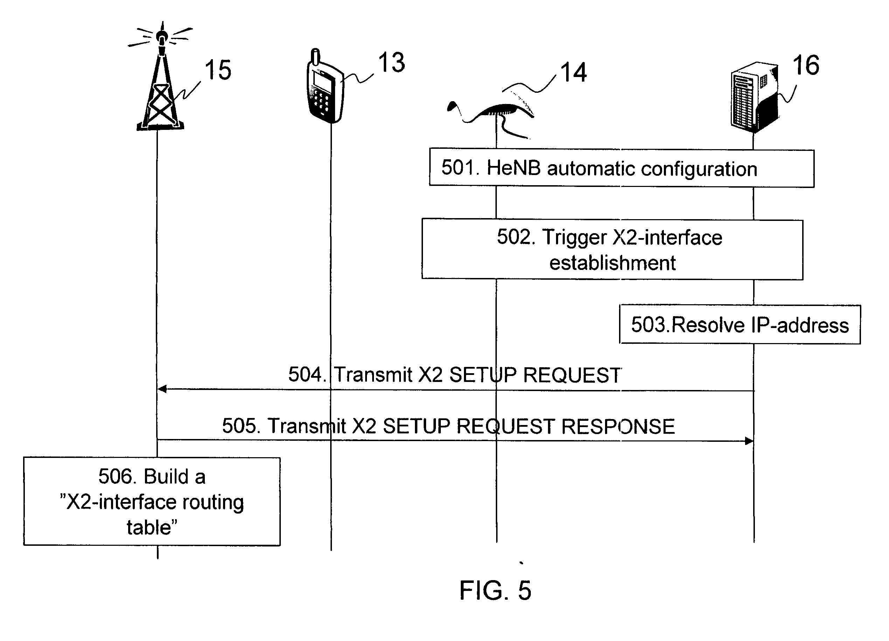

In some scenarios, such as in Fig.5 below, another trigger to establish the X2-interface is needed, and may also be useful for the other solutions. For example, S1-based handover; scanning of the macro network in the target radio base station 14, described as a Network Listener below; Automatic Neighbour Relation (ANR) related reports from the UE 13 connected to the target radio base station 14 and/or target radio base station 14 initiated handovers, see below, may be used as a trigger.

The S1-based handover trigger means that the gateway node 16 uses the S1-based handover request towards a femtocell as the trigger to establish X2 interface towards the source radio base station 15 in this handover request.

Another good possibility would be a so called Network Listener (NWL) i.e. a UE receiver integrated in the target radio base station 14. The NWL shall at least have the capability to collect information, including system information, from the neighbour macrocell 12. The NWL may be used when the target radio base station 14 is powered-on and preferably also regularly. The latter as the macrocell surrounding may change over time. A change in the macrocell surrounding may also be monitored with the ANR function, by which UE 13 reports detected neighbour cells, in the target radio base station 14. An important information per detected macrocell for the solutions below maybe E-CGI.

This means that the identity of the source radio base station 15 and its served cell 12, that the NWL or ANR has detected, may be derived. This information may be used to establish the X2-interface towards the needed source radio base station 15.

A way to combat the problem that the restriction to maximum 256 served cells reported across the X2 interface causes for gateway node 16 is that the gateway node 16 may select only the relevant served femtocells to report, since normally only a fraction of the served femtocells are actually neighbours to any of the macrocells served by the source radio base station 15 on the other side of the X2 interface.

One efficient way to select the relevant femtocells to report is to utilize a mechanism wherein the target radio base station 14, preferably proactively, reports, to the gateway node 16 which macrocells or macro source radio base stations, the target radio base station 14 may hear, e.g. detected through NWL or ANR. In the context of X2 establishment the gateway node 16 may use this information to report. This may be performed in the X2 SETUP RESPONSE message, reporting to the source radio base station 15 only the femtocells of the target radio base station 14 that have heard the concerned source radio base station 15, or heard any of the macrocells of the concerned source radio base station 15, or received them in ANR report from the UE 13. If the target radio base station 14 that the X2 SETUP REQUEST message from the source radio base station 15 concerns has not reported that it may hear the concerned source radio base station 15, or any of its macrocells, or received them in ANR report from UE 13, the gateway node 16 will report the femtocells of this target radio base station 14 to the source radio base station 15 anyway.

In some embodiments, target radio base station 14 initiated handovers are used as a trigger for X2 interface establishment may be performed as follows. As previously mentioned the X2 interface between the target radio base station 14 and its gateway node 16 may be proactively established already at deployment/configuration of the target radio base station 14 and the target radio base station 14 may use "default routing" in the sense that it sends all its X2 signalling to the gateway node 16, i.e. across the X2 interface towards the target radio base station 14. In this scenario the gateway node 16 may not report served cells at all or report an indication stating "all neighbour cells" to the target radio base station 14 over the X2 interface and, instead, the target radio base station 14 may by default act as if all detected neighbour cells may be reached via the X2 interface towards the gateway node 16. Hence, the target radio base station 14 will always try to initiate an X2 based handover, whenever the UE 13 needs to be handed over to a neighbour cell. This may be used as a trigger for X2 interface establishment from the gateway node 16 to the source radio base station of the concerned neighbour cell, in case this X2 interface does not already exist. If the target radio base station 14 sends an X2 message, e.g. an X2 HANDOVER REQUEST, with a target E-CGI whose serving source radio base station 15 the gateway node 16 does not have an X2 interface towards, the gateway node 16 may initiate X2 interface establishment. If this is too slow to furnish the triggering handover, the gateway node 16 may return a rejection to the target radio base station 14 indicating that an S1 HO is needed. The gateway node 16 should however still establish the X2 interface, even if it is not used for the handover that triggered its establishment.

Fig. 4 shows a schematic diagram of a first embodiment wherein selecting/establishing X2 interface is disclosed. According to this exemplary embodiment, the target radio base station 14 broadcasts, in addition to E-CGI, also information about the nature of the E-CGI, the mask. As stated above, this mask provides information that makes it possible to determine how the E-CGI should be interpreted with respect to the embedded gateway node ID. When the UE 13 reports the E-CGI to the source radio base station 15 it also provides the mask to the source radio base station 15. The source radio base station 15 is enabled to determine the gateway node ID and, after retrieving the gateway node IP address, the source radio base station 15 may establish the X2 interface to the correct gateway node 16.

This solution may also be used to select the correct X2 interface, out of already established X2 interfaces, in the source radio base station 15 (see Fig.5) i.e. not only for establishing new X2 interfaces towards the correct node (see Fig.4). The steps do not have to be taken in the order stated below, but may be taken in any suitable order.
**Step 401.** The target radio base station 14 starts up and gets configuration data, e.g. the mask and E-CGI to broadcast as part of system information.
**Step 402.** The target radio base station 14 establishes an S1 interface between the target radio base station 14 and the gateway node 16.
**Step 403.** The target radio base station 14 registers to the network via the gateway node 16. The target radio base station 14 may report the macro source radio base station 15 and/or macrocell(s) it may hear.
**Step 404.** The target radio base station 14 establishes an X2 interface between the target radio base station 14 and the gateway node 16. If the target radio base station 14 has reported heard macro radio base station(s) or macrocell(s), the gateway node 16 may proactively perform establishment of X2 to the source radio base station 15 of the reported macrocell(s) already at this stage, although this is not shown in figure 4. However, it may be advantageous to let the source radio base station 15 control the X2 interface establishment and wait until it's needed, i.e. a handover request is received. This, because otherwise X2 updates, in terms of relevant served cells, may need to be performed when subsequent radio base stations report the same macro source radio base station 15.
**Step 405.** The UE 13 is active in a macrocell served by the source radio base station 15.
**Step 406.** The target radio base station 14 broadcasts the mask and E-CGI as part of the system information (SI). The mask specifies how many bits of the target radio base station 14 E-CGI that should be used to derive the network node ID of the Gateway node. The UE 13 gets within the broadcasting range of the femtocell and receives the broadcasted system information and may also receive Physical Cell Identity (PCI).
**Step 407.** The UE 13 reports the heard E-CGI and the mask, and may also report PCI, to the source radio base station 15. It should be noted that this step may consist of multiple steps, the details of which are not of significance for this invention, for example the UE 13 may first report the PCI and then report the E-CGI and the mask in another step. The
**Step 408.** The source radio base station 15 uses the mask to determine how many bits of the E-CGI that should be used to find out the network node ID of the target radio base station 14 which in this case should really be the network node ID of the gateway node 16. The source radio base station 15 resolves the network node ID of the gateway node 16, i.e. the gateway node ID, to an IP address, e.g. by performing a Domain Name System (DNS) lookup via a DNS query.
**Step 409.** The source radio base station 15 tries to establish an X2 interface to the gateway node 16 and reports its served cells, for example by transmitting an X2 SETUP REQUEST comprising source radio base station identity and served cell identities. This may be performed as a standard X2 interface establishment and includes for example establishment of the Stream Control Transmission Protocol (SCTP) connection(s).
**Step 410.** The gateway node 16 collects the E-CGIs of its connected radio base stations that have heard the source radio base station 15 or any of the macrocells served by the source radio base station 15. The gateway node 16 now has the option to include or not include information about served cells in the information exchanged during the X2 establishment, e.g. in the X2 SETUP RESPONSE message. If it includes information about served cells it would select the femtocells of the radio base stations that have reported, e.g. aided by NWL or ANR, the source radio base station 15 or any of the macrocells that the source radio base station 15 reported as its served cells. If the gateway node 16 does not report any served cells to the source radio base station 15, then the source radio base station 15 needs to use both the mask and E-CGI received from the UE 13 to select the correct X2-interface for handovers into femtocells served by the gateway node 16. If the gateway node 16 does report served cells, then it is enough for the source radio base station 15 to use the E-CGI received from the UE 13 to select the correct X2-interface.
**Step 411.** The gateway node 16 transmits the X2 SETUP RESPONSE to the source radio base station 15 with the contents selected in step 410, for example, network node identity of the gateway node 16 and/or served cells of the target radio base station 14.
**Step 412.** The source radio base station 15 transmits a handover request to the gateway node 16. This step shows how the source radio base station 15 may use the X2-interface routing information to select the correct X2-interface. If the gateway node 16 reported served cells in step 411, then the source radio base station 15 finds a match by looking at the E-CGI received from the UE 13. If the gateway node 16 reported only network node identity of the gateway node 16 in step 411, then the source radio base station 15 may find a match by finding the longest match of the network node identity retrieved by using both the E-CGI and mask received from the UE 13, i.e. in a similar way as in step 408, in order to match the gateway node identity in the E-CGI received from the UE 13 with the gateway node identity associated with the X2 interface.
**Step 413.** The X2 handover signalling continues with the gateway node 16 relaying messages between the source radio base station 15 and the target radio base station 14.

**FIG. 5** shows an exemplary embodiment of a method of using the mask. The steps do not have to be taken in the order stated below, but may be taken in any suitable order. According to this exemplary embodiment, the gateway node 16 indicates in the X2 SETUP REQUEST, and possibly in the X2 SETUP RESPONSE, also depending on which side triggered the establishment of the X2 interface, the mask.

The source radio base station 15 may use this information to determine which gateway node 16 the femtocell of a reported E-CGI belongs to, and thus which already established X2 interface that should be used to communicate with the target radio base station 14 serving the femtocell. This solution however may not be used to derive the Gateway node address for X2 establishment, so another mechanism is needed for that.

The main principle of this solution is that the gateway node 16 informs the source radio base station 15 about both the network node ID of the gateway node 16 and the mask during X2 interface establishment. Because of this main principle, this solution may only be used to select the correct X2 interface among already established X2 interfaces in the source radio base station 15. This solution may not be used as the trigger for X2 establishment, and to derive the gateway node ID and gateway node IP address prior to X2 interface establishment as the mask is signalled first during the X2 establishment. This also means that another trigger is needed to establish the X2 interface.

The following triggers are as described above.
• For the establishment of X2 interface from the Gateway node towards the source radio base station 15, shown in Fig. 5:
   - S1-based handover from an source radio base station 15 towards the gateway node 16, i.e. really towards one of the HeNBs connected to the gateway node,
   - scanning of the macro network in the target radio base station 14 and/or
   - ANR-related reports from the UE 13 connected to the target radio base station 14.
• For the establishment of X2 interface from the source radio base station 15 towards the gateway node 16, not shown:
   - S1-based handover from the Gateway node, i.e. really from one of the HeNBs connected to the gateway node, towards the source radio base station 15.

When a target radio base station 14 connects to its gateway node 16, the target radio base station 14 may automatically establish its X2 interface towards the gateway node 16 as part of the installation procedures. As part of the installation procedure the target radio base station 14 may report the macrocells or macro radio base stations, for example, the source radio base station 15, it can hear. In order to hear macrocells or macro radio base stations the target radio base station 14 may be equipped with a NWL.

Fig.5 shows the case where the gateway node 16 initiates the X2 interface establishment. The same principle to obtain the mask may be applied in the case when the source radio base station 15 initiates this establishment and in this case the X2 SETUP RESPONSE will comprise both the network node ID of the gateway node 16 and the mask.

As in Fig. 4, the target radio base station 14 may report detected macrocells or macro radio base stations to the gateway node 16 and the gateway node 16 may report selected served femtocells to the source radio base station 15, but this is not shown in Fig. 5.
**Step 501.** The automatic configuration of the target radio base station 14 is performed. The step 501 in Fig. 5 corresponds to the steps 401-404 in Fig.4. For example, the target radio base station 14 starts up and gets configuration data, e.g. the mask and E-CGI to broadcast as part of system information. The target radio base station 14 establishes an S1 interface between the target radio base station 14 and the gateway node 16. The target radio base station 14 registers to the network via the gateway node 16. The target radio base station 14 may report the macro source radio base station 15 that it can hear. This may be performed either in conjunction with S1 establishment, integrated in the S1 establishment procedure, or after the S1 establishment.
**Step 502.** Any of the possible triggers for X2 establishment from the gateway node 16 takes place. This may for example be S1-based handover, scanning of the macro network in the target radio base station 14, i.e. the NWL, and/or ANR-related reports from the UE 13 connected to the target radio base station 14, with subsequent report(s) of detected macrocells to the Gateway node 16. The main information used here is the identity of the source radio base station 15 which the X2-interface is to be established to.
**Step 503.** The gateway node 16 resolves the IP address of the source radio base station 15 based on the eNB-ID, e.g. by performing a DNS lookup.
**Step 504.** The gateway node 16 initiates to establish an X2 interface to the source radio base station 15 by sending the X2 SETUP REQUEST message to the source radio base station 15. This message contains the network node ID of the gateway node 16 and the mask that the source radio base station 15 shall use to find the correct network node ID from the E-CGIs later received from the UE 13. This step comprises also the standard X2 interface establishment and includes for example establishment of the SCTP connection(s).
**Step 505.** The source radio base station 15 returns an X2 SETUP RESPONSE to the gateway node 16.
**Step 506.** The source radio base station 15 creates an "X2-interface routing table", which may include associating network node identities of gateway nodes with established X2 interfaces, and is able to find the correct X2-interface when it later receives an E-CGI from the UE 13.

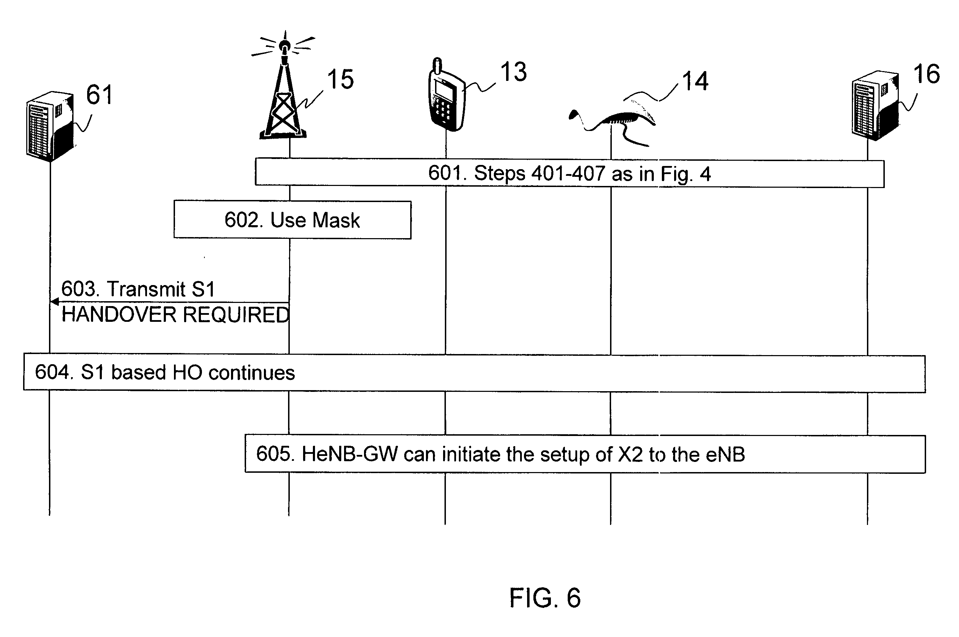

**Fig. 6** is a schematic diagram of an embodiment herein. Fig. 6 shows an exemplary method which is a variant of the method in Fig. 4, i.e. the mask for the E-CGI is broadcasted from the target radio base station 14 and reported by the UE 13 to the source radio base station 15. However, in this case the source radio base station 15 uses the information to address a network node ID of the target gateway node 16 in an S1AP HANDOVER REQUIRED message. This message is then forwarded by **a source MME 61,** if needed, i.e. unless the source and target MME are one and the same, to the target MME for S1 interface selection. The method is depicted in Fig. 6.
**Step 601.** The steps 401-407 as described for Fig. 4 is performed. For example, automatic configuration of the target radio base station 14 is performed and S1 and X2 interfaces are set up. The SI information is broadcasted within the target cell 11 and relevant parts of it are received and reported by the UE 13.
**Step 602.** The source radio base station 15 uses the mask to determine how many bits of the E-CGI that should be used to find out the target network node ID, which in this case should be the Network node ID of the gateway node 16.
**Step 603.** The source radio base station 15 transmits a S1AP HANDOVER REQUIRED message initiating a S1 based handover. The network node ID of the gateway node 16 is used as 'Target ID/Target eNB-ID' in the S1AP HANDOVER REQUIRED message.
**Step 604.** S1 based handover continues.
**Step 605.** The gateway node 16 may initiate the establishment of X2 interface based on information received in the S1AP HANDOVER REQUIRED message, i.e. send the X2 SETUP REQUEST to the correct source radio base station 15. This step follows also the standard X2 interface establishment and includes for example establishment of the SCTP connection(s).

It is possible to combine the disclosed solutions and use these simultaneously.

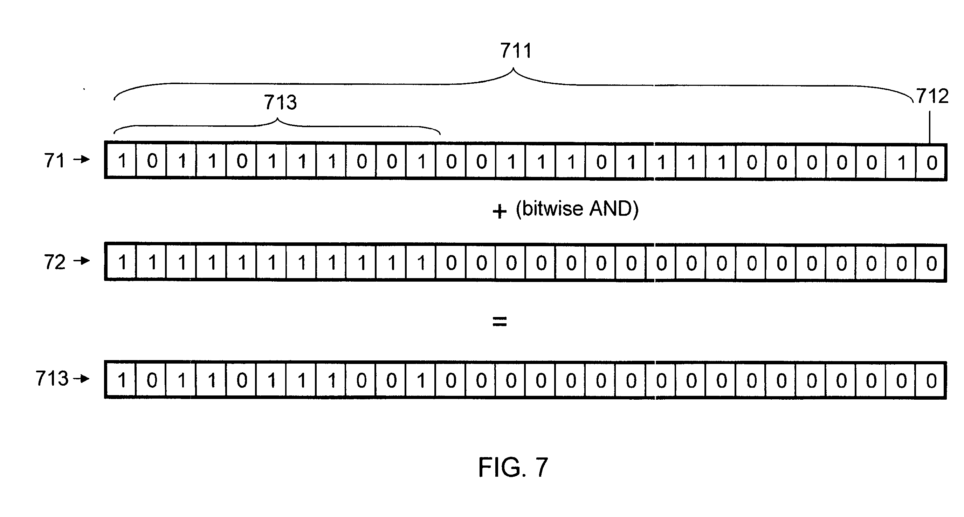

Figures 7-9 illustrate how the gateway node ID may be extracted from the mask according to exemplary embodiments. The three examples shown differ in the length of the target radio base station identity field, that is, the HeNB-ID field.

**Fig. 7** shows an example where **an E-CGI 71** comprises **a target radio base station identity 711,** 27 bits long, leaving 1 bit to indicate **a cell identity 712. A gateway node identity 713** is embedded in the E-CGI 71. **A mask 72** is used to extract the gateway node identity 713 from E-CGI 71.

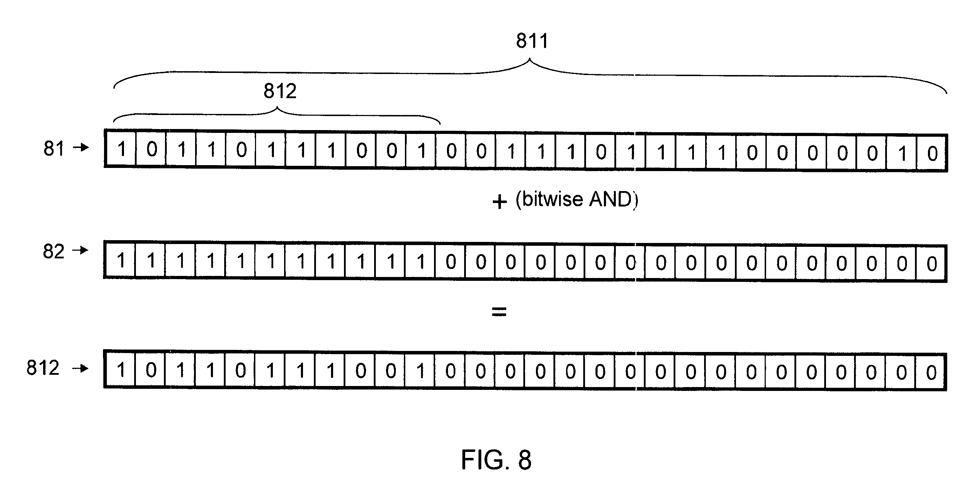

In **Fig. 8****,** a **target radio base station identity 811** is 28 bits long, which leaves no bits for the cell identity. In other words, only a single cell may be handled by the target radio base station in this example. **A gateway node identity 812** is embedded in **an E-CGI 81. A mask 82** is used to extract the gateway node identity 812 from E-CGI 81.

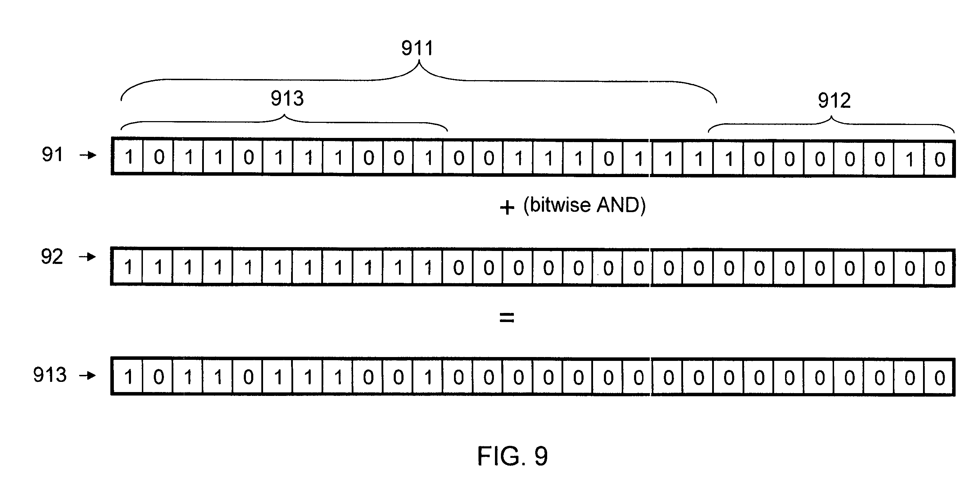

In **Fig. 9****,** a **target radio base station identity 911** is 20 bits long, and the remaining 8 bits are used to indicate **a cell id 912. A gateway node identity 913** is embedded in **an E-CGI 91. A mask 92** is used to extract the gateway node identity 913 from E-CGI 91.

It should be noted that Figures 7-9 show examples only, and that other lengths of the E-CGI, target radio base station identity, or gateway node identity are not excluded. The solution is equally applicable regardless of the lengths of these fields.

Even if exemplified in an LTE radio communications network, the technology may also be implemented in a WCDMA, UMTS, GSM network. The X2 interface may instead be a lub/lur interface in the WCDMA or the like.

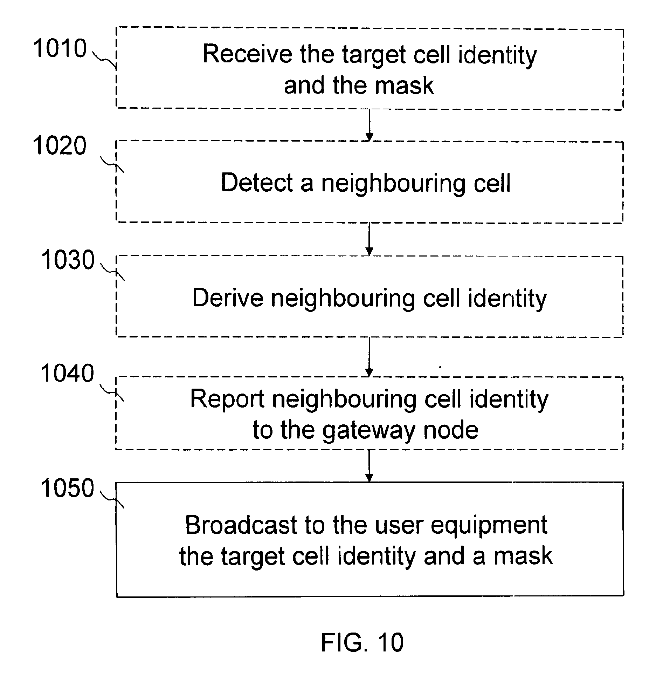

The method steps in the target radio base station, referred to as the target radio base station 14 in the figures, for enabling a handover of a connection to the user equipment 13 from the source cell 12 to the target cell 11 associated with a target cell identity according to some general embodiments will now be described with reference to a flowchart depicted in **Fig. 10****.** The steps do not have to be taken in the order stated below, but may be taken in any suitable order

The source cell 12 is served by a source radio base station 15, and the target cell 11 is served by the target radio base station 14. The target radio base station 14 and the source radio base station 15 are comprised in the radio communications network 100. The target radio base station 14 is adapted to be connected to the gateway node 16 associated with a network node identity. The gateway node 16 is acting as a proxy for the target radio base station 14 towards the core network 17 and towards the source radio base station 15.
**Step 1010.** This is an optional step as indicated with the dashed line. The target radio base station 14 receives configuration data from the core network 17, from the gateway node 16 or from an operation and maintenance node 61. The configuration data comprises the target cell identity and the mask.
**Step 1020.** This is an optional step as indicated with the dashed line. The target radio base station 14 detects a neighbouring cell. This may be performed by an NWL function or an ANR function implemented in the target radio base station 14.
**Step 1030.** This is an optional step as indicated with the dashed line. The target radio base station derives the neighbouring cell identity of the neighbouring cell.
**Step 1040.** This is an optional step as indicated with the dashed line. The target radio base station 14 reports the neighbouring cell identity to the gateway node 16. This report enables the gateway node 16 to perform an establishment of an inter radio access network subsystem connection and/or to restrict the number of served cells included in a connection request/response message based on the report. The inter radio access network subsystem connection may comprise an X2 interface, an lur/lub interface, abis/lur interface or the like.
**Step 1050.** The target radio base station 14 broadcasts, periodically within the target cell 11 on a radio channel to the user equipment 13, the target cell identity and the mask. The target cell identity comprises the network node identity of the gateway node 16 embedded in the target cell identity. The mask is to be used to derive the network node identity from the target cell identity.

The target cell identity may comprise an Evolved Universal Terrestrial Radio Access Network Cell Global Identity, E-CGI, of the target cell 11.

The mask may be conveyed in the form of an integer or a bit string mask.

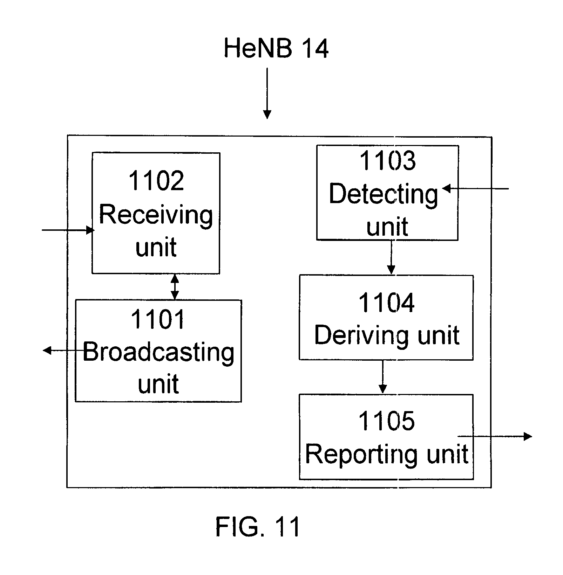

In order to perform the method a target radio base station is provided. A schematic block diagram of the target radio base station 14 is shown in **Fig. 11****.** The target radio base station 14 comprises **a broadcasting unit 1101** arranged to broadcast, periodically within the target cell 11 on the radio channel to the user equipment 13, the target cell identity and a mask. The target cell identity comprises the network node identity of the gateway node 16 embedded in the target cell identity and the mask is to be used to derive the network node identity from the target cell identity.

The target radio base station 14 may comprise **a receiving unit 1102** arranged to receives configuration data from the core network 17, from the gateway node 16 or from an operation and maintenance node 61. The configuration data comprises the target cell identity and the mask.

Furthermore, the target radio base station 14 may comprise **a detecting unit 1103** arranged to detect a neighbouring cell. This may be performed by an NWL function or an ANR function implemented in the target radio base station 14.

The target radio base station may also comprise **a deriving unit 1104** arranged to derive the neighbouring cell identity of the neighbouring cell. The target radio base station 14 may further comprise **a reporting unit 1105** arranged to report the neighbouring cell identity to the gateway node 16. This report enables the gateway node 16 to perform an establishment of an inter radio access network subsystem connection and/or to restrict the number of served cells included in a connection request/response message based on the report. The inter radio access network subsystem connection may comprise an X2 interface, an lur/lub interface, abis/lur interface or the like.

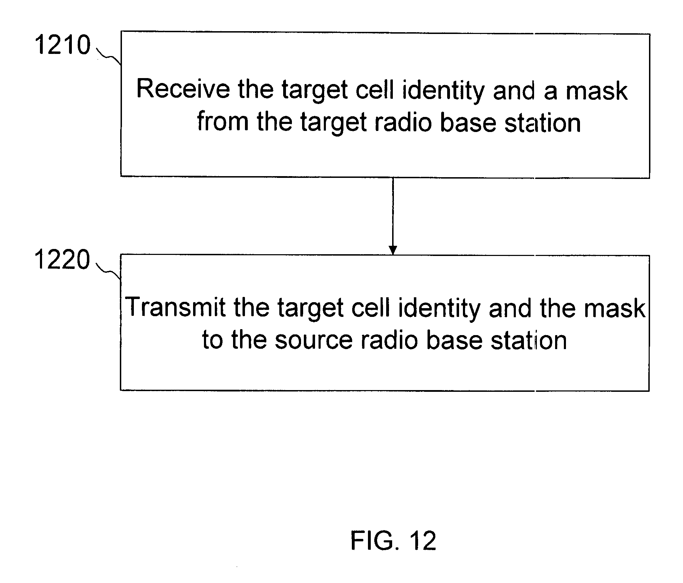

The method steps in the user equipment, referred to as user equipment 15 in the figures, for enabling a handover of a connection to the user equipment 13 from a source cell 12 to a target cell 11 associated with a target cell identity according to some general embodiments will now be described with reference to a flowchart depicted in **Fig. 12****.** The steps do not have to be taken in the order stated below, but may be taken in any suitable order
**Step 1210.** The user equipment 13 receives the target cell identity and a mask broadcasted within the target cell 11 on a radio channel from the target radio base station 14. The target cell identity comprises the network node identity of the gateway node 16 embedded in the target cell identity. The mask is to be used to derive the network node identity from the target cell identity.

This may be performed during an ANR process of the user equipment.
**Step 1220.** The user equipment 13 transmits the target cell identity and the mask to the source radio base station 15, thereby enabling the source radio base station 15 to identify the gateway node 16 the target radio base station 14 belongs to.

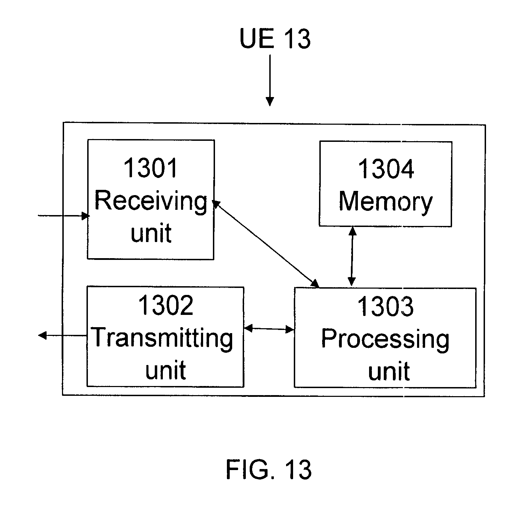

In order to perform the method a user equipment is provided. In **Fig. 13****,** the user equipment 13 is shown in a schematic block diagram.

The user equipment 13 comprises **a receiving unit 1301** arranged to receive the target cell identity and the mask broadcasted within the target cell 11 on a radio channel from the target radio base station 14. The target cell identity comprises the network node identity of the gateway node 16 embedded in the target cell identity and the mask is to be used to derive the network node identity from the target cell identity. Furthermore, the user equipment 13 comprises **a transmitting unit 1302** arranged to transmit the target cell identity and the mask to the source radio base station 15. This enables the source radio base station 15 to identify the gateway node 16 the target radio base station 14 belongs to.

The user equipment 13 may further comprise **a processing unit 1303** arranged to process system information received. The user equipment 13 may further comprise **a memory unit 1304** to store data thereon.

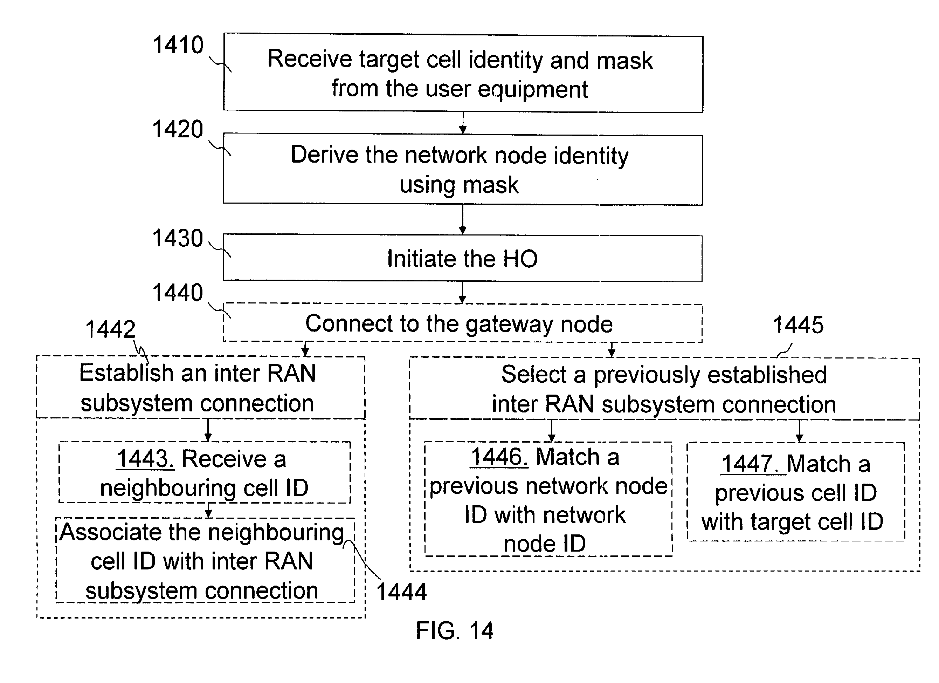

The method steps in the source radio base station, referred to as the source radio base station 15 in the figures, for initiating a handover of a connection to the user equipment 13 from the source cell 12 to the target cell 11 associated with a target cell identity according to some general embodiments will now be described with reference to a flowchart depicted in **Fig. 14****.** The steps do not have to be taken in the order stated below, but may be taken in any suitable order.
**Step 1410.** The source radio base station 15 receives, on a radio channel from the user equipment 13, the target cell identity and a mask. The target cell identity comprises the network node identity of the gateway node 16 embedded in the target cell identity, and the mask is to be used to derive the network node identity from the target cell identity.
**Step 1420.** The source radio base station 15 derives the network node identity embedded in the target cell identity using the mask.
**Step 1430.** The source radio base station 15 initiates the handover of the connection to the user equipment 13 from the source cell 12 to the target cell 11 based on the derived network node identity. In some embodiments, the step of *initiating* comprises to transmit a handover request to a core network node, which message comprises the network node identity as a requested target identity.
**Step 1440.** This is an optional step as indicated with the dashed line. The source radio base station 15 connects to the gateway node 16 using the derived network node identity.
**Step 1442.** This is an optional step as indicated with the dashed line. The source radio base station 15 establishes an inter radio access network subsystem connection to the gateway node 16. This step may further comprises to associate the network node identity with the inter radio access network subsystem connection.
**Step 1443.** This is an optional step as indicated with the dashed line. The source radio base station 15 receives from the gateway node 16 a neighboring cell identity of a neighboring cell of the target cell 11.
**Step 1444.** This is an optional step as indicated with the dashed line. The source radio base station 15 associates the neighboring cell identity with the inter radio access network subsystem connection.
**Step 1445.** This is an optional step as indicated with the dashed line. The source radio base station selects a previously established inter radio access network subsystem connection to the gateway node 16.
**Step 1446.** This is an optional step as indicated with the dashed line. The source radio base station matches a previous network node identity associated with the previously established inter radio access network subsystem connection with the network node identity by finding a longest match of the network node identity using both the target cell identity and the mask received from the user equipment 13.
**Step 1447.** This is an optional step as indicated with the dashed line. A previous cell identity may be associated with the previously established inter radio access network subsystem connection. The source radio base station 15 matches the target cell identity received from the user equipment 13 with the previous cell identity associated with the previously established inter radio access network subsystem connection.

The source radio base station may retrieve an IP address of the gateway node, from a domain name system in response to a query, resolved from the network node identity. The IP address is used to establish the inter radio access network subsystem connection.

The inter radio access network subsystem connection may comprises an X2 interface, and lub/lur interface or the like.

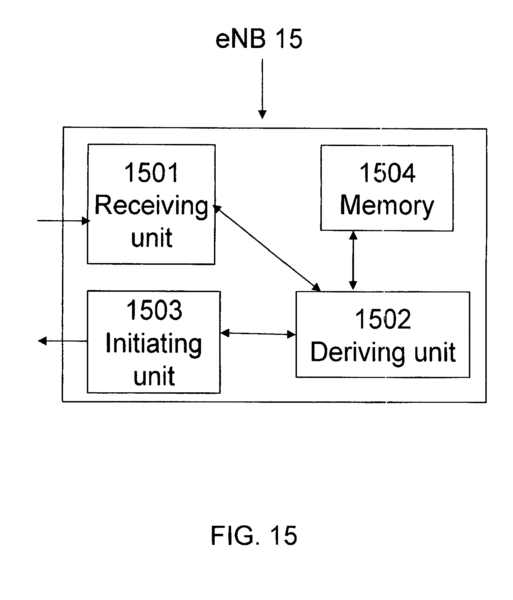

In order to perform the method a source radio base station is provided. In **Fig. 15****,** a schematic block diagram is depicting the source radio base station, denoted also as eNB 15. The source radio base station comprises **a receiving unit 1501** arranged to receive, on a radio channel from the user equipment 13, the target cell identity and a mask. The target cell identity comprises the network node identity of the gateway node 16 embedded in the target cell identity and the mask is to be used to derive the network node identity from the target cell identity. Furthermore, the source radio base station 15 comprises **a deriving unit 1502** arranged to derive the network node identity embedded in the target cell identity using the mask. In addition the source radio base station comprises **an initiating unit 1503** arranged to initiate the handover of the connection to the user equipment 13 from the source cell 12 to the target cell 11 based on the derived network node identity. Furthermore, the source radio base station may comprise **a memory unit 1504** arranged to have data, such as masks, network node identities and the like, stored thereon.

The present mechanism for gateway node 16 addressing may be implemented through one or more processors, together with computer program code for performing the functions of the present solution. The program code mentioned above may also be provided as a computer program product, for instance in the form of a data carrier carrying computer program code for performing the present solution when being loaded into the inventive network node. One such carrier may be in the form of a CD ROM disc. It is however feasible to use other data carriers such as a memory stick. The computer program code may furthermore be provided as pure program code on a server and downloaded to the inventive network node remotely.

The embodiments may also be described to provide methods so that a node, e.g. a macro eNB, in the network may determine the target node identifier, e.g. the eNB -ID of a HeNB GW, from an E-CGI without any configuration in the node determining the identifier. The main principle is that a mask is provided together with the E-CGI to the node determining the target node identifier. The mask will indicate the number of bits of the E-CGI that are used to identify the HeNB GW to which the HeNB of this particular femtocell is connected.

This information may then be used for example in the following solutions:
a) by a macro eNB to establish the X2 interface to the correct HeNB GW;
b) by a macro eNB to select the correct X2 interface of the already established X2 interfaces;
c) by an MME to select the correct S1 interface of the already established S1 interfaces.

It should be noted that although it is currently assumed in 3GPP that the X2 interface will not be used in relation to HeNB and HeNB GW's, however in the future it may very well turn out to be necessary to use X2 for HeNB-related handovers because of the increased signalling and processing load that will otherwise be put on the MME:s.

The mask information is communicated to the source radio base station 15 determining the target identifier. Thus, the mask information is broadcasted in the system information together with the E-CGI. The UE 13 reports both the E-CGI and the mask to the source radio base station 15 and then this information may be used in all cases a), b) and c) above. As a variant the "Main Node Mask" may also be reported to the source radio base station 15 by the gateway node 16.

In the drawings and specification, there have been disclosed exemplary embodiments of the invention. However, many variations and modifications may be made to these embodiments without substantially departing from the principles of the present invention. Accordingly, although specific terms are employed, they are used in a generic and descriptive sense only and not for purposes of limitation, the scope of the invention being defined by the following claims.

In particular, it should be noted that although terminology specific to 3GPP LTE/SAE is used in this disclosure, the invention is not limited to such a system but is equally applicable to other wireless systems which may benefit from flexible addressing of nodes. Throughout this disclosure, when using the word "comprise" or "comprising" it shall be interpreted as non-limiting, i.e. meaning "consist at least of".

## Claims

1. A method performed in a target radio base station (14) for enabling a handover of a connection to a user equipment (13) from a source cell (12) to a target cell (11) associated with a target cell identity, which source cell (12) is served by a source radio base station (15), and which target cell (11) is served by the target radio base station (14), wherein the target radio base station (14) and the source radio base station (15) are comprised in a radio communications network (100), and wherein the target radio base station (14) is adapted to be connected to a gateway node (16) associated with a network node identity, which gateway node (16) is acting as a proxy for the target radio base station (14) towards a core network (17) and towards the source radio base station (15), wherein the method is **characterised in** comprising the following steps
*- broadcasting* (1050), periodically within the target cell (11) on a radio channel to the user equipment (13), the target cell identity and a mask, wherein the target cell identity comprises the network node identity of the gateway node (16) embedded in the target cell identity, and wherein the mask is to be used to derive the network node identity from the target cell identity.

2. A method according to claim 1, further comprising the step
*- receiving* (1010) configuration data comprising the target cell identity and the mask from the core network (17), from the gateway node (16) or from an operation and maintenance node.

3. A method according to any of the claims 1-2, further comprising the steps
*- detecting* (1020) a neighbouring cell,
*- deriving* (1030) the neighbouring cell identity, and
*- reporting* (1040) the neighbouring cell identity to the gateway node (16), enabling the gateway node (16) to perform an establishment of an inter radio access network subsystem connection to the source radio base station (15) and/or to restrict the number of served cells included in a connection request/response message to the target radio base station 14 based on the report.

4. A method according to any of the claims 1-3, wherein the target cell identity comprises an Evolved Universal Terrestrial Radio Access Network Cell Global Identity of the target cell (11).

5. A method according to any of the claims 1-4, wherein the mask is conveyed in the form of an integer or a bit string mask.

6. A method performed in a user equipment (13) for enabling a handover of a connection to the user equipment (13) from a source cell (12) to a target cell (11) associated with a target cell identity, which source cell (12) is served by a source radio base station (15), and which target cell (11) is served by a target radio base station (14), wherein the target radio base station (14) and the source radio base station (15) are comprised in a radio communications network (100), and wherein the target radio base station (14) is adapted to be connected to a gateway node (16) associated with a network node identity, which gateway node (16) is acting as a proxy for the target radio base station (14) towards a core network (17) and towards the source radio base station (15), the method is **characterised in** comprising the following steps
*- receiving* (1210) the target cell identity and a mask broadcasted within the target cell (11) on a radio channel from the target radio base station (14), which target cell identity comprises the network node identity of the gateway node (16) embedded in the target cell identity, and wherein the mask is to be used to derive the network node identity from the target cell identity, and
*- transmitting* (1220) the target cell identity and the mask to the source radio base station (15) thereby enabling the source radio base station (15) to identify the gateway node (16) the target radio base station (14) belongs to.

7. A method performed in a source radio base station (15) for initiating a handover of a connection to a user equipment (13) from a source cell (12) to a target cell (11) associated with a target cell identity, which source cell (12) is served by the source radio base station (15), and which target cell (11) is served by a target radio base station (14), wherein the target radio base station (14) and the source radio base station (15) are comprised in a radio communications network (100), and wherein the target radio base station (14) is adapted to be connected to a gateway node (16) associated with a network node identity, which gateway node (16) is acting as a proxy for the target radio base station (14) towards a core network (17) and towards the source radio base station (15), the method is **characterised in** comprising the following steps
*- receiving* (1410), on a radio channel from the user equipment (13), the target cell identity and a mask, which target cell identity comprises the network node identity of the gateway node (16) embedded in the target cell identity, and wherein the mask is to be used to derive the network node identity from the target cell identity,
*- deriving* (1420) the network node identity embedded in the target cell identity using the mask, and
*- initiating* (1430) the handover of the connection to the user equipment (13) from the source cell (12) to the target cell (11) based on the derived network node identity.

8. A method according to claim 7, further comprising the step
*- connecting* (1440) to the gateway node (16) using the derived network node identity.

9. A method according to claim 8 wherein the step of *connecting* (1440) comprises
*- establishing* (1442) an inter radio access network subsystem connection to the gateway node (16).

10. A method according to claim 9, wherein the step of *establishing* (1442) the inter radio access network subsystem connection comprises to associate the network node identity with the inter radio access network subsystem connection.

11. A method according to claim 9, wherein the step of *establishing* (1442) the inter radio access network subsystem connection comprises
*- receiving* (1443) from the gateway node (16) a neighbouring cell identity of a neighbouring cell of the target cell (11), and
*- associating* (1444) the neighbouring cell identity with the inter radio access network subsystem connection.

12. A method according to claim 8, wherein the step of *connecting* (1440) comprises
*- selecting* (1445) a previously established inter radio access network subsystem connection to the gateway node (16).

13. A method according to claim 12, wherein the step of *selecting* (1445) comprises
*- matching* (1446) a previous network node identity associated with the previously established inter radio access network subsystem connection with the network node identity by finding a match of the network node identity using both the target cell identity and the mask received from the user equipment (13).

14. A method according to claim 12, wherein a previous cell identity is associated with the previously established inter radio access network subsystem connection and the step of *selecting* (1445) comprises
*- matching* (1447) the target cell identity received from the user equipment (13) with the previous cell identity associated with the previously established inter radio access network subsystem connection.

15. A method according to any of the claims 7-14, wherein the step of *initiating* (1430) comprises transmitting a handover request to a core network node, which message comprises the network node identity as a requested target identity.

16. A method according to any of the claims 7-15, further comprising the step
*- retrieving* an IP address of the gateway node, from a domain name system in response to a query, resolved from the network node identity, wherein the IP address is used to establish the inter radio access network subsystem connection.

17. A method according to claims 7-16, wherein the inter radio access network subsystem connection comprises an X2 interface, and lub/lur interface.

18. An target radio base station (14) for enabling a handover of a connection to a user equipment (13) from a source cell (12) to a target cell (11) associated with a target cell identity, which source cell (12) is served by a source radio base station (15), and which target cell (11) is served by the target radio base station (14), wherein the target radio base station (14) and the source radio base station (15) are comprised in a radio communications network (100), and wherein the target radio base station (14) is adapted to be connected to a gateway node (16) associated with a network node identity, which gateway node (16) is acting as a proxy for the target radio base station (14) towards a core network (17) and towards the source radio base station (15), wherein the target radio base station (14) is **characterised in** comprising
a broadcasting unit (1101) arranged to broadcast, periodically within the target cell (11) on a radio channel to the user equipment (13), the target cell identity and a mask, wherein the target cell identity comprises the network node identity of the gateway node (16) embedded in the target cell identity and the mask is to be used to derive the network node identity from the target cell identity.

19. A user equipment (13) for enabling a handover of a connection to the user equipment (13) from a source cell (12) to a target cell (11) associated with a target cell identity, which source cell (12) is served by a source radio base station (15), and which target cell (11) is served by the target radio base station (14), wherein the target radio base station (14) and the source radio base station (15) are comprised in a radio communications network (100), and wherein the target radio base station (14) is adapted to be connected to a gateway node (16) associated with a network node identity, which gateway node (16) is acting as a proxy for the target radio base station (14) towards a core network (17) and towards the source radio base station (15), wherein the user equipment (13) is **characterised in** comprising
a receiving unit (1301) arranged to receive the target cell identity and a mask broadcasted within the target cell (11) on a radio channel from the target radio base station (14), which target cell identity comprises the network node identity of the gateway node (16) embedded in the target cell identity and the mask is to be used to derive the network node identity from the target cell identity, and
a transmitting unit (1302) arranged to transmit the target cell identity and the mask to the source radio base station (15) thereby enabling the source radio base station (15) to identify the gateway node (16) the target radio base station (14) belongs to.

20. A source radio base station (15) for initiating a handover of a connection to a user equipment (13) from a source cell (12) to a target cell (11) associated with a target cell identity, which source cell (12) is served by the source radio base station (15), and which target cell (11) is served by the target radio base station (14), wherein the target radio base station (14) and the source radio base station (15) are comprised in a radio communications network (100), and wherein the target radio base station (14) is adapted to be connected to a gateway node (16) associated with a network node identity, which gateway node (16) is acting as a proxy for the target radio base station (14) towards a core network (17) and towards the source radio base station (15), wherein the source radio base station is **characterised in** comprising a receiving unit (1501) arranged to receive, on a radio channel from the user equipment (13), the target cell identity and a mask, which target cell identity comprises the network node identity of the gateway node (16) embedded in the target cell identity and the mask is to be used to derive the network node identity from the target cell identity,
a deriving unit (1502) arranged to derive the network node identity embedded in the target cell identity using the mask, and
an initiating unit (1503) arranged to initiate the handover of the connection to the user equipment (13) from the source cell (12) to the target cell (11) based on the derived network node identity.

## Patentansprüche

1. Verfahren, ausgeführt in einer Ziel-Funkbasisstation (14), zum Ermöglichen einer Übergabe einer Verbindung mit einer Benutzerausrüstung (13) von einer Quellenzelle (12) an eine Zielzelle (11), die mit einer Zielzellenkennung assoziiert ist, wobei die Quellenzelle (12) von einer Quellen-Funkbasisstation (15) versorgt wird und die Zielzelle (11) von der Ziel-Funkbasisstation (14) versorgt wird, wobei die Ziel-Funkbasisstation (14) und die Quellen-Funkbasisstation (15) in einem Funkkommunikationsnetzwerk (100) enthalten sind und wobei die Ziel-Funkbasisstation (14) angepasst ist, um mit einem Gatewayknoten (16), der mit einer Netzwerkknotenkennung assoziiert ist, verbunden zu werden, wobei der Gatewayknoten (16) als ein Proxy für die Ziel-Funkbasisstation (14) hin zu einem Kemnetzwerk (17) und hin zu der Quellen-Funkbasisstation (15) fungiert, wobei das Verfahren **dadurch gekennzeichnet ist, dass** es die folgenden Schritte umfasst:
*- Senden* (1050), periodisch innerhalb der Zielzelle (11) in einem Funkkanal an die Benutzerausrüstung (13), der Zielzellenkennung und einer Maske, wobei die Zielzellenkennung die Netzwerkknotenkennung des Gatewayknotens (16) umfasst, eingebettet in der Zielzellenkennung, und wobei die Maske zu verwenden ist, um die Netzwerkknotenkennung aus der Zielzellenkennung abzuleiten.

2. Verfahren nach Anspruch 1, weiter den folgenden Schritt umfassend:
*- Empfangen* (1010) von Konfigurationsdaten, umfassend die Zielzellenkennung und die Maske, von dem Kemnetzwerk (17), von dem Gatewayknoten (16) oder von einem Betriebs- und Wartungsknoten.

3. Verfahren nach einem der Ansprüche 1-2, weiter die folgenden Schritte umfassend:
*- Detektieren* (1020) einer Nachbarzelle,
*- Ableiten* (1030) der Nachbarzellenkennung und
*- Berichten* (1040) der Nachbarzellenkennung an den Gatewayknoten (16), wodurch der Gatewayknoten (16) in die Lage versetzt wird, eine Einrichtung einer Funkzugangsnetzwerk-Untersystem-Zusammenschaltung mit der Quellen-Funkbasisstation (15) durchzuführen und/oder die Zahl der versorgten Zellen, die in einer Verbindungsanforderungs-/-antwortnachricht an die Ziel-Funkbasisstation 14 enthalten sind, basierend auf dem Bericht zu begrenzen.

4. Verfahren nach einem der Ansprüche 1-3, wobei die Zielzellenkennung eine globale Zellenkennung eines entwickelten universellen terrestrischen Funkzugangsnetzwerks der Zielzelle (11) umfasst.

5. Verfahren nach einem der Ansprüche 1-4, wobei die Maske in der Form einer ganzzahligen oder einer Bitfolgen-Maske befördert wird.

6. Verfahren, ausgeführt in einer Benutzerausrüstung (13), zum Ermöglichen einer Übergabe einer Verbindung mit der Benutzerausrüstung (13) von einer Quellenzelle (12) an eine Zielzelle (11), die mit einer Zielzellenkennung assoziiert ist, wobei die Quellenzelle (12) von einer Quellen-Funkbasisstation (15) versorgt wird und die Zielzelle (11) von der Ziel-Funkbasisstation (14) versorgt wird, wobei die Ziel-Funkbasisstation (14) und die Quellen-Funkbasisstation (15) in einem Funkkommunikationsnetzwerk (100) enthalten sind und wobei die Ziel-Funkbasisstation (14) angepasst ist, um mit einem Gatewayknoten (16), der mit einer Netzwerkknotenkennung assoziiert ist, verbunden zu werden, wobei der Gatewayknoten (16) als ein Proxy für die Ziel-Funkbasisstation (14) hin zu einem Kemnetzwerk (17) und hin zu der Quellen-Funkbasisstation (15) fungiert, wobei das Verfahren **dadurch gekennzeichnet ist, dass** es die folgenden Schritte umfasst:
*- Empfangen* (1210) der Zielzellenkennung und einer Maske, die innerhalb der Zielzelle (11) gesandt werden, in einem Funkkanal von der Ziel-Funkbasisstation (14), wobei die Zielzellenkennung die Netzwerkknotenkennung des Gatewayknotens (16) umfasst, eingebettet in der Zielzellenkennung, und wobei die Maske zu verwenden ist, um die Netzwerkknotenkennung aus der Zielzellenkennung abzuleiten, und
*- Übertragen* (1220) der Zielzellenkennung und der Maske an die Quellen-Funkbasisstation (15), wodurch die Quellen-Funkbasisstation (15) in die Lage versetzt wird, den Gatewayknoten (16), zu dem die Ziel-Funkbasisstation (14) gehört, zu identifizieren.

7. Verfahren, durchgeführt in einer Quellen-Funkbasisstation (15) zum Einleiten einer Übergabe einer Verbindung mit einer Benutzerausrüstung (13) von einer Quellenzelle (12) an eine Zielzelle (11), die mit einer Zielzellenkennung assoziiert ist, wobei die Quellenzelle (12) von der Quellen-Funkbasisstation (15) versorgt wird und die Zielzelle (11) von einer Ziel-Funkbasisstation (14) versorgt wird, wobei die Ziel-Funkbasisstation (14) und die Quellen-Funkbasisstation (15) in einem Funkkommunikationsnetzwerk (100) enthalten sind und wobei die Ziel-Funkbasisstation (14) angepasst ist, um mit einem Gatewayknoten (16), der mit einer Netzwerkknotenkennung assoziiert ist, verbunden zu werden, wobei der Gatewayknoten (16) als ein Proxy für die Ziel-Funkbasisstation (14) hin zu einem Kemnetzwerk (17) und hin zu der Quellen-Funkbasisstation (15) fungiert, wobei das Verfahren **dadurch gekennzeichnet ist, dass** es die folgenden Schritte umfasst:
*- Empfangen* (1410), in einem Funkkanal von der Benutzerausrüstung (13), der Zielzellenkennung und einer Maske, wobei die Zielzellenkennung die Netzwerkknotenkennung des Gatewayknotens (16) umfasst, eingebettet in der Zielzellenkennung, und wobei die Maske zu verwenden ist, um die Netzwerkknotenkennung aus der Zielzellenkennung abzuleiten,
*- Ableiten* (1420) der in der Zielzellenkennung eingebetteten Netzwerkknotenkennung unter Verwendung der Maske, und
*- Einleiten* (1430) der Übergabe der Verbindung mit der Benutzerausrüstung (13) von der Quellenzelle (12) an die Zielzelle (11) basierend auf der abgeleiteten Netzwerkknotenkennung.

8. Verfahren nach Anspruch 7, weiter den folgenden Schritt umfassend:
*- Verbinden* (1440) mit dem Gatewayknoten (16) unter Verwendung der abgeleiteten Netzwerkknotenkennung.

9. Verfahren nach Anspruch 8, wobei der Schritt des *Verbindens* (1440) umfasst
*- Einrichten* (1442) einer Funkzugangsnetzwerk-Untersystem-Zusammenschaltung mit dem Gatewayknoten (16).

10. Verfahren nach Anspruch 9, wobei der Schritt des *Einrichtens* (1442) der Funkzugangsnetzwerk-Untersystem-Zusammenschaltung umfasst, die Netzwerkknotenkennung mit der Funkzugangsnetzwerk-Untersystem-Zusammenschaltung zu assoziieren.

11. Verfahren nach Anspruch 9, wobei der Schritt des *Einrichtens* (1442) der Funkzugangsnetzwerk-Untersystem-Zusammenschaltung umfasst:
*- Empfangen* (1443), von dem Gatewayknoten (16), einer Nachbarzellenkennung einer Nachbarzelle der Zielzelle (11), und
*- Assoziierten* (1444) der Nachbarzellenkennung mit der Funkzugangsnetzwerk-Untersystem-Zusammenschaltung.

12. Verfahren nach Anspruch 8, wobei der Schritt des *Verbindens* (1440) umfasst:
*- Auswählen* (1445) einer vorher eingerichteten Funkzugangsnetzwerk-Untersystem-Zusammenschaltung mit dem Gatewayknoten (16).

13. Verfahren nach Anspruch 12, wobei der Schritt des *Auswählens* (1445) umfasst:
*- Inübereinstimmungbringen* (1446) einer vorherigen Netzwerkknotenkennung, die mit der vorher eingerichteten Funkzugangsnetzwerk-Untersystem-Zusammenschaltung assoziiert ist, mit der Netzwerkknotenkennung durch Finden einer Übereinstimmung der Netzwerkknotenkennung unter Verwendung sowohl der Zielzellenkennung und der Maske, empfangen von der Benutzerausrüstung (13).

14. Verfahren nach Anspruch 12, wobei eine vorherige Zellenkennung mit der vorher eingerichteten Funkzugangsnetzwerk-Untersystem-Zusammenschaltung assoziiert ist und der Schritt des *Auswählens* (1445) umfasst:
*- Inübereinstimmungbringen* (1447) der von der Benutzerausrüstung (13) empfangenen Zielzellenkennung mit der mit der vorher eingerichteten Funkzugangsnetzwerk-Untersystem-Zusammenschaltung assoziierten vorherigen Zellenkennung.

15. Verfahren nach einem der Ansprüche 7-14, wobei der Schritt des *Einleitens* (1430) umfasst, eine Übergabeanforderung an einen Kemnetzwerkknoten zu übertragen, wobei die Nachricht die Netzwerkknotenkennung als eine angeforderte Zielkennung umfasst.

16. Verfahren nach einem der Ansprüche 7-15, weiter den folgenden Schritt umfassend:
*- Abrufen* einer IP-Adresse des Gatewayknotens von einem Domänennamensystem als Reaktion auf eine Abfrage, aufgelöst aus der Netzwerkknotenkennung, wobei die IP-Adresse verwendet wird, um die Funkzugangsnetzwerk-Untersystem-Zusammenschaltung einzurichten.

17. Verfahren nach den Ansprüchen 7-16, wobei die Funkzugangsnetzwerk-Untersystem-Zusammenschaltung eine X2-Schnittstelle und lub/lur-Schnittstelle umfasst.

18. Ziel-Funkbasisstation (14) zum Ermöglichen einer Übergabe einer Verbindung mit einer Benutzerausrüstung (13) von einer Quellenzelle (12) an eine Zielzelle (11), die mit einer Zielzellenkennung assoziiert ist, wobei die Quellenzelle (12) von einer Quellen-Funkbasisstation (15) versorgt wird und die Zielzelle (11) von der Ziel-Funkbasisstation (14) versorgt wird, wobei die Ziel-Funkbasisstation (14) und die Quellen-Funkbasisstation (15) in einem Funkkommunikationsnetzwerk (100) enthalten sind und wobei die Ziel-Funkbasisstation (14) angepasst ist, um mit einem Gatewayknoten (16), der mit einer Netzwerkknotenkennung assoziiert ist, verbunden zu werden, wobei der Gatewayknoten (16) als ein Proxy für die Ziel-Funkbasisstation (14) hin zu einem Kemnetzwerk (17) und hin zu der Quellen-Funkbasisstation (15) fungiert, wobei die Ziel-Funkbasisstation (14) **dadurch gekennzeichnet ist, dass** sie Folgendes umfasst:
eine Sendeeinheit (1101), angeordnet zum Senden, periodisch innerhalb der Zielzelle (11) in einem Funkkanal an die Benutzerausrüstung (13), der Zielzellenkennung und einer Maske, wobei die Zielzellenkennung die Netzwerkknotenkennung des Gatewayknotens (16) umfasst, eingebettet in der Zielzellenkennung, und wobei die Maske zu verwenden ist, um die Netzwerkknotenkennung aus der Zielzellenkennung abzuleiten.

19. Benutzerausrüstung (13) zum Ermöglichen einer Übergabe einer Verbindung mit der Benutzerausrüstung (13) von einer Quellenzelle (12) an eine Zielzelle (11), die mit einer Zielzellenkennung assoziiert ist, wobei die Quellenzelle (12) von einer Quellen-Funkbasisstation (15) versorgt wird und die Zielzelle (11) von der Ziel-Funkbasisstation (14) versorgt wird, wobei die Ziel-Funkbasisstation (14) und die Quellen-Funkbasisstation (15) in einem Funkkommunikationsnetzwerk (100) enthalten sind und wobei die Ziel-Funkbasisstation (14) angepasst ist, um mit einem Gatewayknoten (16), der mit einer Netzwerkknotenkennung assoziiert ist, verbunden zu werden, wobei der Gatewayknoten (16) als ein Proxy für die Ziel-Funkbasisstation (14) hin zu einem Kemnetzwerk (17) und hin zu der Quellen-Funkbasisstation (15) fungiert, wobei die Benutzerausrüstung (13) **dadurch gekennzeichnet ist, dass** sie Folgendes umfasst:
eine Empfangseinheit (1301), angeordnet zum Empfangen der Zielzellenkennung und einer Maske, die innerhalb der Zielzelle (11) gesandt werden, in einem Funkkanal von der Ziel-Funkbasisstation (14), wobei die Zielzellenkennung die Netzwerkknotenkennung des Gatewayknotens (16) umfasst, eingebettet in der Zielzellenkennung, und wobei die Maske zu verwenden ist, um die Netzwerkknotenkennung aus der Zielzellenkennung abzuleiten, und
eine Übertragungseinheit (1302), angeordnet zum Übertragen der Zielzellenkennung und der Maske an die Quellen-Funkbasisstation (15), wodurch die Quellen-Funkbasisstation (15) in die Lage versetzt wird, den Gatewayknoten (16), zu dem die Ziel-Funkbasisstation (14) gehört, zu identifizieren.

20. Quellen-Funkbasisstation (15) zum Einleiten einer Übergabe einer Verbindung mit einer Benutzerausrüstung (13) von einer Quellenzelle (12) an eine Zielzelle (11), die mit einer Zielzellenkennung assoziiert ist, wobei die Quellenzelle (12) von der Quellen-Funkbasisstation (15) versorgt wird und die Zielzelle (11) von der Ziel-Funkbasisstation (14) versorgt wird, wobei die Ziel-Funkbasisstation (14) und die Quellen-Funkbasisstation (15) in einem Funkkommunikationsnetzwerk (100) enthalten sind und wobei die Ziel-Funkbasisstation (14) angepasst ist, um mit einem Gatewayknoten (16), der mit einer Netzwerkknotenkennung assoziiert ist, verbunden zu werden, wobei der Gatewayknoten (16) als ein Proxy für die Ziel-Funkbasisstation (14) hin zu einem Kemnetzwerk (17) und hin zu der Quellen-Funkbasisstation (15) fungiert, wobei die Quellen-Funkbasisstation **dadurch gekennzeichnet ist, dass** sie eine Empfangseinheit (1501) umfasst, angeordnet zum Empfangen, in einem Funkkanal von der Benutzerausrüstung (13), der Zielzellenkennung und einer Maske, wobei die Zielzellenkennung die Netzwerkknotenkennung des Gatewayknotens (16) umfasst, eingebettet in der Zielzellenkennung, und wobei die Maske zu verwenden ist, um die Netzwerkknotenkennung aus der Zielzellenkennung abzuleiten,
eine Ableitungseinheit (1502), angeordnet zum Ableiten der in der Zielzellenkennung eingebetteten Netzwerkknotenkennung unter Verwendung der Maske, und
eine Einleitungseinheit (1503), angeordnet zum Einleiten der Übergabe der Verbindung mit der Benutzerausrüstung (13) von der Quellenzelle (12) an die Zielzelle (11) basierend auf der abgeleiteten Netzwerkknotenkennung.

## Revendications

1. Procédé mis en oeuvre dans une station de base radio cible (14) en vue de permettre un transfert intercellulaire d'une connexion à un équipement d'utilisateur (13), d'une cellule source (12) à une cellule cible (11) associée à une identité de cellule cible, laquelle cellule source (12) est desservie par une station de base radio source (15), et laquelle cellule cible (11) est desservie par la station de base radio cible (14), dans lequel la station de base radio cible (14) et la station de base radio source (15) sont incluses dans un réseau de radiocommunication (100), et dans lequel la station de base radio cible (14) est apte à être connectée à un noeud de passerelle (16) associé à une identité de noeud de réseau, lequel noeud de passerelle (16) agit en qualité de serveur mandataire pour la station de base radio cible (14) vers un réseau fédérateur (17) et vers la station de base radio source (15), dans lequel le procédé est **caractérisé en ce qu'**il comporte l'étape ci-dessous consistant à :
*- diffuser* (1050) périodiquement, au sein de la cellule cible (11) sur un canal radio, vers l'équipement d'utilisateur (13), l'identité de cellule cible et un masque, dans lequel l'identité de cellule cible comprend l'identité de noeud de réseau du noeud de passerelle (16), intégrée dans l'identité de cellule cible, et dans lequel le masque doit être utilisé en vue de dériver l'identité de noeud de réseau à partir de l'identité de cellule cible.

2. Procédé selon la revendication 1, comprenant en outre l'étape ci-dessous consistant à :
*- recevoir* (1010) des données de configuration comprenant l'identité de cellule cible et le masque à partir du réseau fédérateur (17), à partir du noeud de passerelle (16) ou à partir d'un noeud de maintenance et d'exploitation.

3. Procédé selon l'une quelconque des revendications 1 à 2, comprenant en outre les étapes ci-dessous consistant à :
*- détecter* (1020) une cellule voisine ;
*- dériver* (1030) l'identité de cellule voisine ; et
*- signaler* dans un rapport (1040) l'identité de cellule voisine au noeud de passerelle (16), ce qui permet au noeud de passerelle (16) de mettre en oeuvre l'établissement d'une connexion entre sous-systèmes de réseau d'accès radio à la station de base radio source (15) et/ou de limiter le nombre de cellules desservies incluses dans un message de demande / réponse de connexion sur la station de base radio cible (14), sur la base du rapport.

4. Procédé selon l'une quelconque des revendications 1 à 3, dans lequel l'identité de cellule cible comprend une identification de cellule de réseau d'accès radio terrestre universel évolué de la cellule cible (11).

5. Procédé selon l'une quelconque des revendications 1 à 4, dans lequel le masque est acheminé sous la forme d'un masque de nombre entier ou d'un masque de chaîne de bits.

6. Procédé mis en oeuvre dans un équipement d'utilisateur (13) en vue de permettre un transfert intercellulaire d'une connexion à l'équipement d'utilisateur (13), d'une cellule source (12) à une cellule cible (11) associée à une identité de cellule cible, laquelle cellule source (12) est desservie par une station de base radio source (15), et laquelle cellule cible (11) est desservie par une station de base radio cible (14), dans lequel la station de base radio cible (14) et la station de base radio source (15) sont incluses dans un réseau de radiocommunication (100), et dans lequel la station de base radio cible (14) est apte à être connectée à un noeud de passerelle (16) associé à une identité de noeud de réseau, lequel noeud de passerelle (16) agit en qualité de serveur mandataire pour la station de base radio cible (14) vers un réseau fédérateur (17) et vers la station de base radio source (15), dans lequel le procédé est **caractérisé en ce qu'**il comporte les étapes ci-dessous consistant à :
*- recevoir* (1210) l'identité de cellule cible et un masque diffusés au sein de la cellule cible (11) sur un canal radio, à partir de la station de base radio cible (14), laquelle identité de cellule cible comprend l'identité de noeud de réseau du noeud de passerelle (16), intégrée dans l'identité de cellule cible, et dans lequel le masque doit être utilisé en vue de dériver l'identité de noeud de réseau à partir de l'identité de cellule cible ; et
*- transmettre* (1220) l'identité de cellule cible et le masque à la station de base radio source (15), ce qui permet par conséquent à la station de base radio source (15) d'identifier le noeud de passerelle (16) auquel la station de base radio cible (14) appartient.

7. Procédé mis en oeuvre dans une station de base radio source (15) en vue d'initier un transfert intercellulaire d'une connexion à un équipement d'utilisateur (13), d'une cellule source (12) à une cellule cible (11) associée à une identité de cellule cible, laquelle cellule source (12) est desservie par la station de base radio source (15), et laquelle cellule cible (11) est desservie par une station de base radio cible (14), dans lequel la station de base radio cible (14) et la station de base radio source (15) sont incluses dans un réseau de radiocommunication (100), et dans lequel la station de base radio cible (14) est apte à être connectée à un noeud de passerelle (16) associé à une identité de noeud de réseau, lequel noeud de passerelle (16) agit en qualité de serveur mandataire pour la station de base radio cible (14) vers un réseau fédérateur (17) et vers la station de base radio source (15), dans lequel le procédé est **caractérisé en ce qu'**il comporte les étapes ci-dessous consistant à :
*- recevoir* (1410), sur un canal radio, à partir de l'équipement d'utilisateur (13), l'identité de cellule cible et un masque, laquelle identité de cellule cible comprend l'identité de noeud de réseau du noeud de passerelle (16), intégrée dans l'identité de cellule cible, et dans lequel le masque doit être utilisé en vue de dériver l'identité de noeud de réseau à partir de l'identité de cellule cible ;
*- dériver* (1420) l'identité de noeud de réseau intégrée dans l'identité de cellule cible en utilisant le masque ; et
*- initier* (1430) le transfert intercellulaire de la connexion à l'équipement d'utilisateur (13), de la cellule source (12) à la cellule cible (11), sur la base de l'identité de noeud de réseau dérivée.

8. Procédé selon la revendication 7, comprenant en outre l'étape ci-dessous consistant à :
- *mettre en oeuvre une connexion* (1440) au noeud de passerelle (16) en utilisant l'identité de noeud de réseau dérivée.

9. Procédé selon la revendication 8, dans lequel l'étape de *connexion* (1440) consiste à
- *établir* (1442) une connexion entre sous-systèmes de réseau d'accès radio au noeud de passerelle (16).

10. Procédé selon la revendication 9, dans lequel l'étape *d'établissement* (1442) de la connexion entre sous-systèmes de réseau d'accès radio consiste à associer l'identité de noeud de réseau à la connexion entre sous-systèmes de réseau d'accès radio.

11. Procédé selon la revendication 9, dans lequel l'étape *d'établissement* (1442) de la connexion entre sous-systèmes de réseau d'accès radio consiste à :
*- recevoir* (1443), à partir du noeud de passerelle (16), une identité de cellule voisine d'une cellule voisine de la cellule cible (11) ; et
*- associer* (1444) l'identité de cellule voisine à la connexion entre sous-systèmes de réseau d'accès radio.

12. Procédé selon la revendication 8, dans lequel l'étape de *connexion* (1440) consiste à :
- *sélectionner* (1445) une connexion entre sous-systèmes de réseau d'accès radio précédemment établie au noeud de passerelle (16).

13. Procédé selon la revendication 12, dans lequel l'étape de *sélection* (1445) consiste à :
- *mettre en concordance* (1446) une identité de noeud de réseau précédente associée à la connexion entre sous-systèmes de réseau d'accès radio précédemment établie et l'identité de noeud de réseau, en recherchant une concordance de l'identité de noeud de réseau en utilisant à la fois l'identité de cellule cible et le masque reçus à partir de l'équipement d'utilisateur (13).

14. Procédé selon la revendication 12, dans lequel une identité de cellule précédente est associée à la connexion entre sous-systèmes de réseau d'accès radio précédemment établie et l'étape de *sélection* (1445) consiste à :
*- mettre en concordance* (1447) l'identité de cellule cible reçue à partir de l'équipement d'utilisateur (13) et l'identité de cellule précédente associée à la connexion entre sous-systèmes de réseau d'accès radio précédemment établie.

15. Procédé selon l'une quelconque des revendications 7 à 14, dans lequel l'étape *d'initiation* (1430) consiste à transmettre un message de demande de transfert intercellulaire à un noeud de réseau fédérateur, lequel message de demande comprend l'identité de noeud de réseau sous la forme d'une identité cible demandée.

16. Procédé selon l'une quelconque des revendications 7 à 15, comprenant en outre l'étape ci-dessous consistant à :
*- extraire* une adresse IP du noeud de passerelle d'un système de noms de domaine, en réponse à une requête, résolue à partir de l'identité de noeud de réseau, dans lequel l'adresse IP est utilisée en vue d'établir la connexion entre sous-systèmes de réseau d'accès radio.

17. Procédé selon l'une quelconque des revendications 7 à 16, dans lequel la connexion entre sous-systèmes de réseau d'accès radio comprend une interface X2, et une interface lub / lur.

18. Station de base radio cible (14) destinée à permettre un transfert intercellulaire d'une connexion à un équipement d'utilisateur (13), d'une cellule source (12) à une cellule cible (11) associée à une identité de cellule cible, laquelle cellule source (12) est desservie par une station de base radio source (15), et laquelle cellule cible (11) est desservie par la station de base radio cible (14), dans lequel la station de base radio cible (14) et la station de base radio source (15) sont incluses dans un réseau de radiocommunication (100), et dans lequel la station de base radio cible (14) est apte à être connectée à un noeud de passerelle (16) associé à une identité de noeud de réseau, lequel noeud de passerelle (16) agit en qualité de serveur mandataire pour la station de base radio cible (14) vers un réseau fédérateur (17) et vers la station de base radio source (15), dans laquelle la station de base radio cible (14) est **caractérisée en ce qu'**elle comporte :
une unité de radiodiffusion (1101) agencée de manière à diffuser périodiquement, au sein de la cellule cible (11) sur un canal radio, vers l'équipement d'utilisateur (13), l'identité de cellule cible et un masque, dans laquelle l'identité de cellule cible comprend l'identité de noeud de réseau du noeud de passerelle (16), intégrée dans l'identité de cellule cible, et le masque doit être utilisé en vue de dériver l'identité de noeud de réseau à partir de l'identité de cellule cible.

19. Équipement d'utilisateur (13) destiné à permettre un transfert intercellulaire d'une connexion à un équipement d'utilisateur (13), d'une cellule source (12) à une cellule cible (11) associée à une identité de cellule cible, laquelle cellule source (12) est desservie par une station de base radio source (15), et laquelle cellule cible (11) est desservie par la station de base radio cible (14), dans lequel la station de base radio cible (14) et la station de base radio source (15) sont incluses dans un réseau de radiocommunication (100), et dans lequel la station de base radio cible (14) est apte à être connectée à un noeud de passerelle (16) associé à une identité de noeud de réseau, lequel noeud de passerelle (16) agit en qualité de serveur mandataire pour la station de base radio cible (14) vers un réseau fédérateur (17) et vers la station de base radio source (15), dans lequel le équipement d'utilisateur (13) est **caractérisé en ce qu'**il comporte :
une unité de réception (1301) agencée de manière à recevoir l'identité de cellule cible et un masque diffusés au sein de la cellule cible (11) sur un canal radio, à partir de la station de base radio cible (14), laquelle identité de cellule cible comprend l'identité de noeud de réseau du noeud de passerelle (16), intégrée dans l'identité de cellule cible, et le masque doit être utilisé en vue de dériver l'identité de noeud de réseau à partir de l'identité de cellule cible ; et
une unité de transmission (1302) agencée de manière à transmettre l'identité de cellule cible et le masque à la station de base radio source (15), ce qui permet par conséquent à la station de base radio source (15) d'identifier le noeud de passerelle (16) auquel la station de base radio cible (14) appartient.

20. Station de base radio source (15) destinée à initier un transfert intercellulaire d'une connexion à un équipement d'utilisateur (13), d'une cellule source (12) à une cellule cible (11) associée à une identité de cellule cible, laquelle cellule source (12) est desservie par la station de base radio source (15), et laquelle cellule cible (11) est desservie par la station de base radio cible (14), dans laquelle la station de base radio cible (14) et la station de base radio source (15) sont incluses dans un réseau de radiocommunication (100), et dans laquelle la station de base radio cible (14) est apte à être connectée à un noeud de passerelle (16) associé à une identité de noeud de réseau, lequel noeud de passerelle (16) agit en qualité de serveur mandataire pour la station de base radio cible (14) vers un réseau fédérateur (17) et vers la station de base radio source (15), dans laquelle la station de base radio source est **caractérisée en ce qu'**elle comporte une unité de réception (1501) agencée de manière à recevoir, sur un canal radio, à partir de l'équipement d'utilisateur (13), l'identité de cellule cible et un masque, laquelle identité de cellule cible comprend l'identité de noeud de réseau du noeud de passerelle (16), intégrée dans l'identité de cellule cible, et le masque doit être utilisé en vue de dériver l'identité de noeud de réseau à partir de l'identité de cellule cible ;
une unité de dérivation (1502) agencée de manière à dériver l'identité de noeud de réseau intégrée dans l'identité de cellule cible, en utilisant le masque ; et
une unité d'initiation (1503) agencée de manière à initier le transfert intercellulaire de la connexion à l'équipement d'utilisateur (13), de la cellule source (12) à la cellule cible (11), sur la base de l'identité de noeud de réseau dérivée.
